(19) Europäisches Patentamt / European Patent Office / Office européen des brevets

(11) **EP 2 545 342 B1**

(12) **EUROPÄISCHE PATENTSCHRIFT**

(45) Veröffentlichungstag und Bekanntmachung des Hinweises auf die Patenterteilung:
**06.05.2015  Patentblatt 2015/19**

(21) Anmeldenummer: **11708463.2**

(22) Anmeldetag: **15.03.2011**

(51) Int Cl.:
***G01D 5/14*** *(2006.01)*

(86) Internationale Anmeldenummer:
**PCT/EP2011/053917**

(87) Internationale Veröffentlichungsnummer:
**WO 2011/117118 (29.09.2011 Gazette 2011/39)**

(54) **SENSORANORDNUNG UND VERFAHREN ZUM ERMITTELN EINER MAGNETISIERUNGSRICHTUNG EINES GEBERMAGNETEN**

SENSOR ASSEMBLY AND METHOD FOR DETERMINING A MAGNETIZATION DIRECTION OF AN ENCODER MAGNET

SYSTÈME DE CAPTEURS ET PROCÉDÉ DE DÉTERMINATION DU SENS D'AIMANTATION D'UN AIMANT TRANSMETTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010  DE 102010003292**

(43) Veröffentlichungstag der Anmeldung:
**16.01.2013  Patentblatt 2013/03**

(73) Patentinhaber: **Fraunhofer-Gesellschaft zur Förderung der angewandten Forschung e.V.
80686 München (DE)**

(72) Erfinder:
• **HOHE, Hans-Peter
91332 Heiligenstadt (DE)**
• **SAUERER, Josef
91074 Herzogenaurach (DE)**

(74) Vertreter: **Hersina, Günter et al
Schoppe, Zimmermann, Stöckeler
Zinkler, Schenk & Partner mbB
Patentanwälte
Radlkoferstrasse 2
81373 München (DE)**

(56) Entgegenhaltungen:
EP-A2- 1 464 918    EP-A2- 2 159 546
DE-A1- 10 248 060    DE-A1-102005 027 226
US-A1- 2004 017 187    US-A1- 2004 207 392
US-A1- 2005 258 820

**EP 2 545 342 B1**

**Beschreibung**

Ausführungsbeispiele der Erfindung beziehen sich auf ein Konzept zum Ermitteln einer Magnetisierungsrichtung eines Gebermagneten. Weitere Ausführungsbeispiele der Erfindung beziehen sich auf eine automatische Erkennung der Magnetisierungsrichtung bei Positionsmesssystemen auf magnetischer Basis.

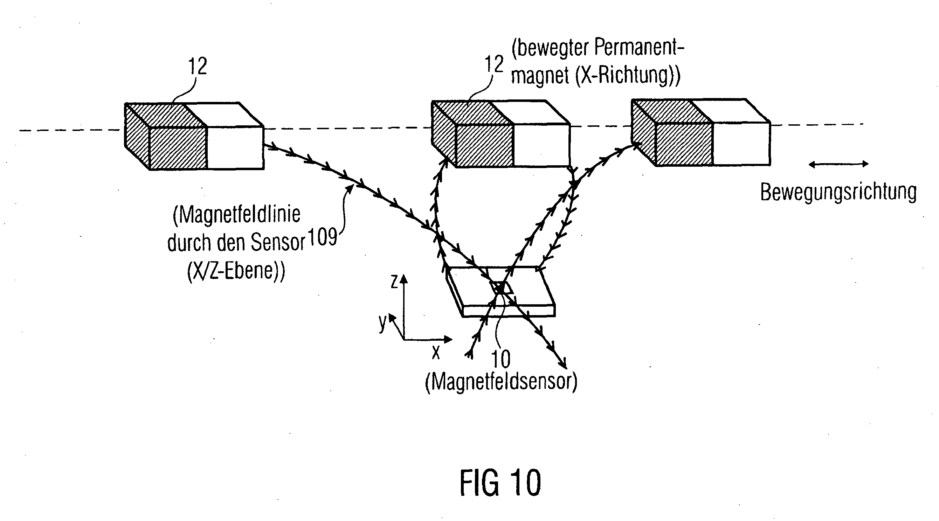

Im Bereich linearer Positionsmesssysteme auf magnetischer Basis ist es seit langem üblich, Hallsensoren in Verbindung mit sich bewegenden Permanentmagneten einzusetzen, um einachsige, lineare Bewegungen zu überwachen. Prinzipiell sind solche Systeme wie in Fig. 10 aufgebaut. Man hat einen feststehenden Sensor 10, über den sich ein Permanentmagnet 12 linear bewegt. Der Sensor 10 misst entsprechende Magnetfeldwerte und stellt diese Werte einer Auswerteeinheit zur Verfügung, die daraus dann eine aktuelle Position des Magneten 12 berechnet. In dem in der Fig. 10 gezeigten Koordinatensystem ist die X-Achse im Wesentlichen parallel zur linearen Bewegungsachse des Permanentmagneten 12. Ferner liegen die X-Achse und die Z-Achse in der Zeichenebene, während die Y-Achse senkrecht zur Zeichenebene liegt.

Gemäß dem Stand der Technik gibt es verschiedene Auswerteansätze, um mit Hallsensoren die Position eines sich bewegenden Magneten bestimmen zu können.

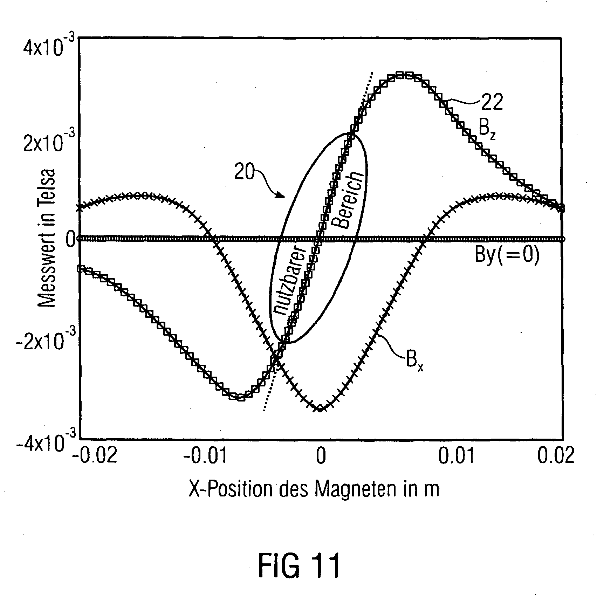

Die einfachste Form einer im Stand der Technik bekannten Vorgehensweise zur Positionsbestimmung nutzt den linearen Bereich 20 der Z-Komponenten 22 des Magnetfelds, wie beispielhaft in Fig. 11 gezeigt. Für das dargestellte Beispiel ist dies in etwa im Bereich von -0,005 m bis +0,005 m (= +/-5 mm) möglich. An den Bereichsgrenzen treten dabei bereits deutliche Nichtlinearitäten auf, so dass bereits für diesen relativ kleinen Messbereich eine Linearisierung verwendet werden muss.

Diese Art der Auswertung ist relativ einfach in der Implementierung, besitzt aber große Nachteile in der Anwendung. Zum einen gehen die Magnettemperatur und beispielsweise auch die herstellungsbedingte Streuung der Magnetisierung direkt in die Messgenauigkeit ein, da der Positionswert direkt aus dem Absolutwert einer Magnetfeldkomponente abgeleitet wird. Zum zweiten ist der nutzbare Verfahrweg des Permanentmagneten bezüglich des Sensors bezogen auf den Bereich, in dem messbare Felder (d.h. Felder deutlich größer als das Erdmagnetfeld von ca. 50 $\mu$T) vom Magneten vorliegen würden, relativ klein. Man nutzt also mit diesem Verfahren weder den Erfassungsbereich des Sensors noch die von dem Permanentmagneten bereitgestellten Magnetfeldkomponenten vollständig aus und hat zusätzlich ein von der Temperatur des Permanentmagneten abhängiges Positionssignal.

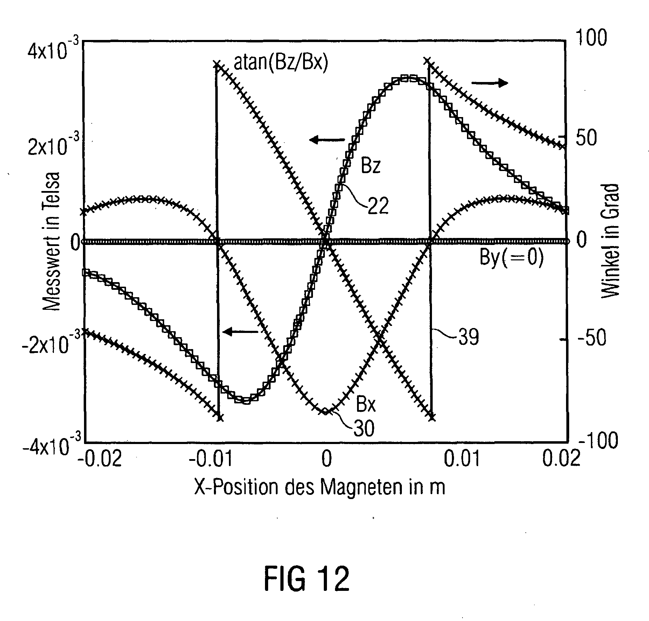

Bei einer weiteren im Stand der Technik bekannten Vorgehensweise gemäß der DE 19836599 A1 nutzt man, um unabhängig von der Temperatur des Magneten zu werden, ein Verfahren, welches das Verhältnis der beiden Magnetfeldkomponenten Bx 30 und Bz 22 und beispielsweise dessen arctan-Berechnung zur Positionsbestimmung nutzt (siehe Fig. 12). Da die Position aus dem Verhältnis zweier Feldkomponenten bestimmt wird, ist dieses Verfahren unabhängig von der Temperatur, sowohl der des Sensorchips als auch der des Magneten. Ferner ist der nutzbare Verfahrbereich größer als bei dem im Vorhergehenden beschriebenen Verfahren.

Ein generelles Problem ist jedoch, dass auch bei diesem Verfahren gemäß der Fig. 12 der Verfahrbereich nicht durch die Höhe der gemessenen Feldkomponenten, sondern durch das Auswerteverfahren begrenzt ist. Daher nutzt man auch bei diesem Verfahren nicht den theoretisch möglichen Verfahrbereich zwischen Sensor und Permanentmagnet aus.

Die Aufgabe der vorliegenden Erfindung besteht daher darin, bei einem Positionsmesssystem auf magnetischer Basis eine Vergrößerung des praktisch nutzbaren Verfahrbereichs zwischen einer Magnetfeldsensoranordnung und einem Gebermagneten und gleichzeitig eine erhöhte Robustheit gegenüber Störeinflüssen, wie beispielsweise gegenüber einem äußeren Störmagnetfeld oder Temperaturänderungen, zu ermöglichen.

Die EP 1 464 918 A2 offenbart eine Vorrichtung und ein Verfahren zur Messung der Position eines Magneten relativ zu einem Messort.

Diese Aufgabe wird durch eine Sensoranordnung nach Anspruch 1 oder 14, ein Verfahren nach Anspruch 9 oder 19 und ein Computerprogramm nach Anspruch 20 gelöst.

Ausführungsbeispiele der vorliegenden Erfindung schaffen eine Sensoranordnung zum Ermitteln einer Magnetisierungsrichtung eines Gebermagneten bezüglich der Sensoranordnung, wobei die Sensoranordnung einen ersten Magnetfeldsensor zur Erfassung einer ersten Magnetfeldkomponente bezüglich einer ersten Raumrichtung und einer zweiten Magnetfeldkomponente bezüglich einer zweiten Raumrichtung und einen zweiten Magnetfeldsensor zur Erfassung einer dritten Magnetfeldkomponente bezüglich der ersten Raumrichtung und einer vierten Magnetfeldkomponente bezüglich der zweiten Raumrichtung aufweist. Hierbei sind der erste Magnetfeldsensor und der zweite Magnetfeldsensor beabstandet voneinander angeordnet. Die Sensoranordnung weist ferner eine Verarbeitungseinrichtung auf, die ausgelegt ist, um die erste Magnetfeldkomponente und die zweite Magnetfeldkomponente miteinander zu kombinieren, um eine erste Kombinationsgröße zu erhalten, um die dritte Magnetfeldkomponente und die vierte Magnetfeldkomponente miteinander zu kombinieren, um eine zweite Kombinationsgröße zu erhalten, um basierend auf einem Vergleich der ersten Kombinationsgröße und der zweiten Kombinationsgröße eine Lage des Gebermagneten bezüglich der Sensoranordnung zu ermitteln, und um basierend auf der ermittelten Lage des Gebermagneten bezüglich der Sensoranordnung und auf einem Vorzeichen einer erfassten Magnetfeldkomponente bezüglich der zweiten Raumrichtung die Magnetisierungsrichtung zu ermitteln.

Eine Erkenntnis der vorliegenden Erfindung ist, dass die gerade genannte Vergrößerung des Verfahrbereichs des Gebermagneten bezüglich der Sensoranordnung bei gleichzeitig erhöhter Robustheit hinsichtlich äußeren Störeinflüssen beispielsweise unter Verwendung einer 4-Quadranten-Auswertemethode, wie sie in der Erfindung noch detailliert beschrieben wird, erreicht werden kann, indem basierend auf der ermittelten Lage des Gebermagneten bezüglich der Sensoranordnung und auf einem Vorzeichen einer erfassten Magnetfeldkomponente bezüglich der zweiten Raumrichtung die Magnetisierungsrichtung des Gebermagneten ermittelt wird. Mit dieser Vorgehensweise kann nun insbesondere unter Verwendung der 4-Quadranten-Auswertemethode (bei einem Positionsmesssystem auf magnetischer Basis) eine Vergrößerung des praktisch nutzbaren Verfahrbereichs des Gebermagneten bezüglich der Sensoranordnung und gleichzeitig eine erhöhte Robustheit der Messanordnung gegenüber Störeinflüssen erreicht werden.

In anderen Worten, bei der vorliegenden Erfindung wird zunächst zur Bestimmung der Magnetisierungsrichtung die aktuelle Lage des Magneten bezüglich der Sensoranordnung, d.h. bezüglich eines durch die Sensoranordnung definierten Referenzpunktes, ermittelt. Man ermittelt also beispielsweise, ob sich der Gebermagnet auf der negativen oder der positiven Seite der X-Achse befindet, wobei der Referenzpunkt beispielsweise als Nullpunkt der X-Achse angenommen wird. Diese Information kann dadurch erhalten werden, dass auf dem Sensorchip nicht nur ein mehrachsiger Magnetfeldsensor, sondern zwei in X-Richtung nebeneinander liegende Sensoren vorgesehen werden. Hierbei wird angenommen, dass die X-Richtung parallel zur Relativbewegung zwischen Sensoranordnung und Gebermagnet ist.

Bei Ausführungsbeispielen der Erfindung ist eine Verarbeitungseinrichtung ausgebildet, um eine erste Lage des Gebermagneten bezüglich der Sensoranordnung zu bestimmen, wenn ein Betrag einer ersten Kombinationsgröße zweier Magnetfeldkomponenten am ersten Magnetfeldsensor größer als ein Betrag einer zweiten Kombinationsgröße zweier Magnetfeldkomponenten am zweiten Magnetfeldsensor ist, und eine zweite Lage des Gebermagneten bezüglich der Sensoranordnung zu bestimmen, wenn der Betrag der zweiten Kombinationsgröße größer als der Betrag der ersten Kombinationsgröße ist.

In anderen Worten, der Sensor, bei dem insbesondere der Betrag des Magnetfelds am größten ist, befindet sich näher am Magneten. Über diesen Vergleich der Magnetfeldbeträge an den Orten der beiden mehrachsig messenden Magnetfeldsensoren lässt sich somit ableiten, ob sich der Magnet auf der positiven oder der negativen Seite der X-Achse befindet.

Bei weiteren Ausführungsbeispielen der Erfindung ist die Verarbeitungseinrichtung ferner ausgebildet, um, falls die erste Lage bestimmt wurde, bei einem positiven Vorzeichen der zweiten Magnetfeldkomponente oder der vierten Magnetfeldkomponente eine erste Magnetisierungsrichtung anzugeben, und, falls die zweite Lage bestimmt wurde, eine zweite Magnetisierungsrichtung anzugeben, und, falls die erste Lage bestimmt wurde, bei einem negativen Vorzeichen der zweiten Magnetfeldkomponente oder der vierten Magnetfeldkomponente die zweite Magnetisierungsrichtung anzugeben, und, falls die zweite Lage bestimmt wurde, die erste Magnetisierungsrichtung anzugeben. Mit dem Wissen, auf welcher Seite sich der Magnet befindet, kann somit in einem zweiten Schritt insbesondere durch Betrachtung der Z-Komponente des Magnetfelds eindeutig die Magnetisierungsrichtung des Magneten abgeleitet werden.

Ausführungsbeispiele der Erfindung werden nachfolgend Bezug nehmend auf die beiliegenden Figuren näher erläutert. Es zeigen:

Fig. 1a-b    eine Sensoranordnung zum Ermitteln einer Magnetisierungsrichtung eines Gebermagneten gemäß einem Ausführungsbeispiel der vorliegenden Erfindung;

Fig. 2    beispielhafte Verläufe der Beträge einer ersten Kombinationsgröße von zwei Magnetfeldkomponenten eines ersten Magnetfeldsensors und einer zweiten Kombinationsgröße von zwei Magnetfeldkomponenten eines zweiten Magnetfeldsensors bezüglich einer X-Position des Gebermagneten;

Fig. 3a-d    Prinzipdarstellungen zur Ermittlung einer Magnetisierungsrichtung eines Gebermagneten entsprechend vier unterschiedlichen Anordnungen des Gebermagneten bezüglich der Sensoranordnung;

Fig. 3e    eine Übersicht zu den in den Fig. 3a bis 3d gezeigten vier Anordnungen;

Fig. 4    beispielhafte Verläufe der Beträge einer von dem ersten oder zweiten Magnetfeldsensor erfassten Magnetfeldkomponente bezüglich einer ersten Raumrichtung und einer von dem ersten oder zweiten Magnetfeldsensor erfassten Magnetfeldkomponente bezüglich der zweiten Raumrichtung zur Bestimmung, ob sich der Gebermagnet innerhalb eines Mittenbereichs um einen Referenzpunkt der Sensoranordnung befindet;

Fig. 5    eine Prinzipdarstellung zur Ermittlung der Magnetisierungsrichtung eines Gebermagneten entsprechend der Fig. 3, der sich in dem in der Fig. 4 gezeigten Mittenbereich befindet;

Fig. 6      beispielhafte Verläufe von Beträgen einer ersten Kombinationsgröße von zwei Magnetfeldkomponenten eines ersten Magnetfeldsensors und einer zweiten Kombinationsgröße von zwei Magnetfeldkomponenten eines zweiten Magnetfeldsensors mit jeweils einem Doppelmaximum;

Fig. 7      beispielhafte Verläufe von Beträgen einer ersten Kombinationsgröße von zwei Magnetfeldkomponenten eines ersten Magnetfeldsensors und einer zweiten Kombinationsgröße von zwei Magnetfeldkomponenten eines zweiten Magnetfeldsensors, bei denen das Doppelmaximum jeweils auf ein Maximum reduziert wurde;

Fig. 8      ein beispielhaftes Auswertediagramm einer 4-Quadranten-Winkelberechnung unter Verwendung der X- und Z-Komponente eines Magnetfelds des Gebermagneten;

Fig. 9      ein Flussdiagramm eines Verfahrens zur Ermittlung der Lage bzw. der Magnetisierungsrichtung des Gebermagneten gemäß der vorliegenden Erfindung;

Fig. 10      eine Prinzipdarstellung einer bekannten Sensoranordnung zur Positionsbestimmung eines Gebermagneten gemäß dem Stand der Technik;

Fig. 11      ein beispielhaftes Auswertediagramm entsprechend der in Fig. 10 gezeigten Sensoranordnung unter Verwendung einer Z-Komponente eines Magnetfelds des Gebermagneten; und

Fig. 12      ein weiteres beispielhaftes Auswertediagramm entsprechend der in Fig. 10 gezeigten Sensoranordnung unter Verwendung von X- und Z-Komponenten des Magnetfelds.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in den verschiedenen Ausführungsbeispielen aufeinander anwendbar.

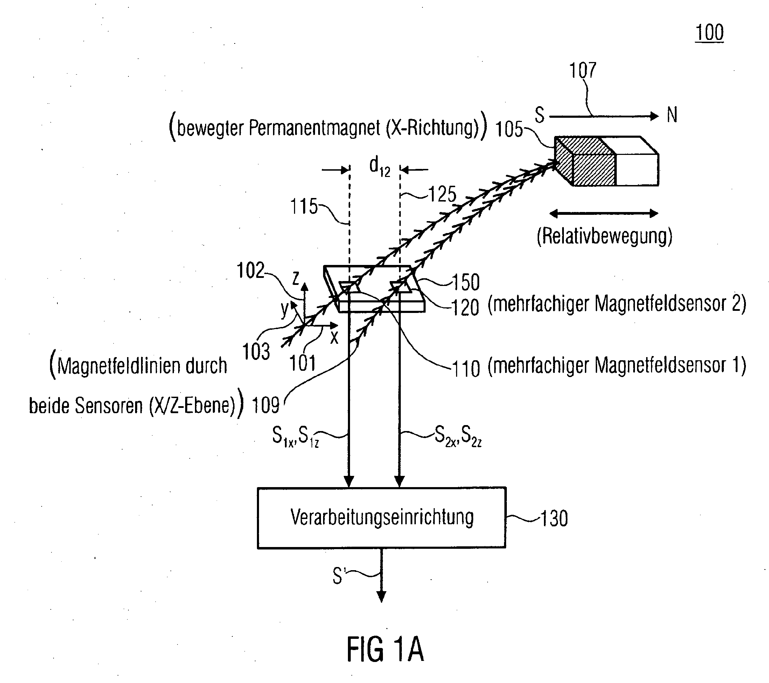

Fig. 1a zeigt eine Sensoranordnung 100 zur Lagebestimmung eines Gebermagneten 105 gemäß einem Ausführungsbeispiel der vorliegenden Erfindung. Wie in Fig. 1a gezeigt, weist die Sensoranordnung 100 einen ersten Magnetfeldsensor 110, einen zweiten Magnetfeldsensor 120 und eine Verarbeitungseinrichtung 130 auf. Der erste Magnetfeldsensor 110 und der zweite Magnetfeldsensor 120 können insbesondere als mehrachsige Magnetfeldsensoren, wie beispielsweise als eine Kombination bezüglich unterschiedlicher Raumrichtungen empfindlicher Magnetfeldsensoren (z.B. vertikale/horizontale Hallsensoren bzw. Hallelemente), ausgebildet sein. Dabei können die Magnetfeldsensoren 110, 120 jeweils bezüglich unterschiedlicher, linear unabhängiger Raumrichtungen, wie beispielsweise bezüglich einer X-Richtung 101 und einer Z-Richtung 102, für ein Magnetfeld des Gebermagneten 105 empfindlich sein.

Das Koordinatensystem der Fig. 1a ist dadurch definiert, dass die X-Achse im Wesentlichen parallel zu einer linearen Relativbewegungsrichtung des Gebermagneten 105 bezüglich der Sensoranordnung 100 ist. Ferner liegen die X-Achse und die Z-Achse in der Zeichenebene, während die Y-Achse senkrecht zur Zeichenebene liegt. D.h. bezüglich der Relativbewegungsrichtung zwischen Gebermagnet und Sensoranordnung zeigt die die X-Achse in eine axiale Richtung (X-Richtung 101), während die Z-Achse in eine radiale Richtung (Z-Richtung 102) zeigt. Ferner entspricht eine Magnetfeldkomponente bezüglich der axialen Richtung einer axialen Komponente $B_x$, während eine Magnetfeldkomponente bezüglich der radialen Richtung einer radialen Komponente $B_z$ entspricht, wobei eine Magnetfeldkomponente bezüglich einer Y-Richtung 103, die senkrecht zu einer durch die X-Achse und die Z-Achse aufgespannten Ebene ist, beispielsweise im vorliegenden Fall aus Symmetriegründen als vernachlässigbar angesehen wird.

In der Sensoranordnung 100 sind der erste Magnetfeldsensor 110 an einer ersten Position 115 und der zweite Magnetfeldsensor 120 an einer zweiten Position 125 beabstandet voneinander angeordnet. Die beiden Magnetfeldsensoren 110, 120 können beispielsweise wie in der Fig. 1a gezeigt, auf einem Sensorchip 150 angeordnet sein. Der Gebermagnet 105 kann beispielsweise als Permanentmagnet oder als Elektromagnet ausgebildet sein. Bei Ausführungsbeispielen der Erfindung kann der Gebermagnet 105 relativ zu der Sensoranordnung 100 beispielsweise linear entlang einer Achse (z.B. parallel zur X-Richtung 101) bewegt werden. Die beispielsweise lineare Relativbewegung kann z.B. dadurch erfolgen, dass der Gebermagnet 105 bewegt wird und die Sensoranordnung 100 fest steht oder die Sensoranordnung 100 bewegt wird und der Gebermagnet 105 fest steht oder die Sensoranordnung 100 und der Gebermagnet 105 relativ zueinander bewegt werden. Wie in Fig. 1a gezeigt, durchdringen Magnetfeldlinien 109, die von dem Gebermagneten 105 ausgehen, die beiden Magnetfeldsensoren 110, 120 jeweils an den Positionen 115 und 125. In der in der Fig. 1a dargestellten Situation, bei der der Gebermagnet 105 eine Magnetisierungsrichtung 107 aufweist, liegen die Magnetfeldlinien 109 in einer X/Z-Ebene und weisen Komponenten in positiver X-bzw. Z-Richtung 101, 102 auf. Die beiden Magnetfeldsensoren 110, 120 können jeweils Sensorsignale $S_{1x}$, $S_{1z}$ und $S_{2x}$, $S_{2z}$, abhängig von gemessenen Magnetfeldkomponenten $B_{1x}$, $B_{1z}$ und $B_{2x}$, $B_{2z}$, und insbesondere proportional zu den gemessenen Magnetfeldkomponenten $B_{1x}$, $B_{1z}$ und $B_{2x}$, $B_{2z}$, ausgeben. Die jeweiligen Magnetfeldkomponenten werden in der Verarbeitungseinrichtung 130 verarbeitet und ausgewertet, um schließlich beispielsweise ein Ausgangssignal S' zu erhalten, das beispielsweise eine Information über eine Magnetisierungsrichtung 107 des Gebermagneten 105 aufweist.

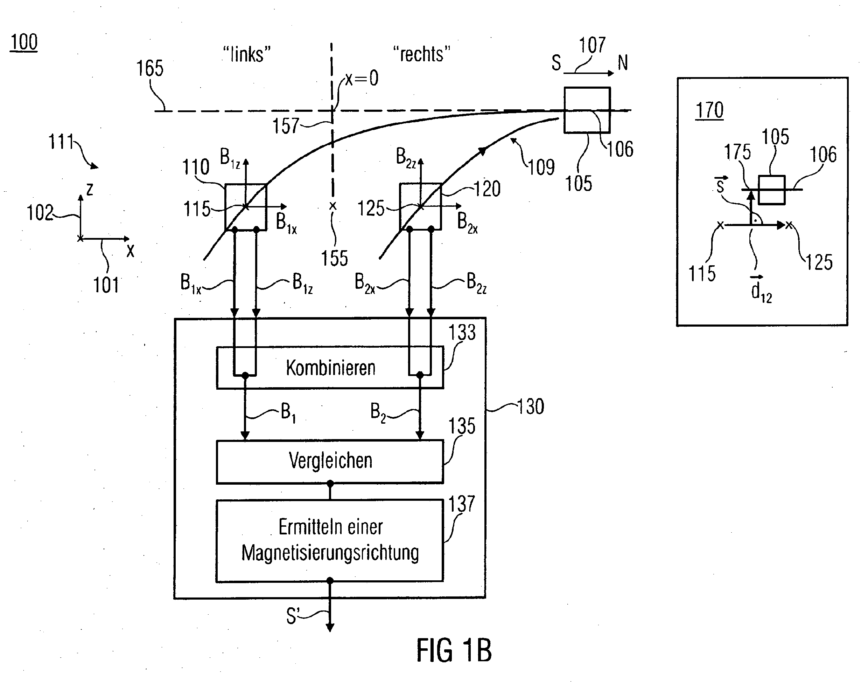

Fig. 1b zeigt weitere Details der in Fig. 1a gezeigten Sensoranordnung 100. Bei Ausführungsbeispielen der Erfindung weisen der erste Magnetfeldsensor 110 und der zweite Magnetfeldsensor 120 jeweils zwei Sensorelemente auf, wobei die Sensorelemente bezüglich der unterschiedlichen Raumrichtungen 101, 102 empfindlich sind. Insbesondere sind die Sensorelemente des ersten Magnetfeldsensors 110 ausgebildet, um eine erste Magnetfeldkomponente $B_{1x}$ in eine erste Raumrichtung (z.B. X-Richtung 101) und eine zweite Magnetfeldkomponente $B_{1z}$ in eine zweite Raumrichtung (z.B. Z-Richtung 102) auszugeben. Ferner sind die Sensorelemente des zweiten Magnetfeldsensors 120 ausgebildet, um eine dritte Magnetfeldkomponente $B_{2x}$ in die erste Raumrichtung 101 und eine vierte Magnetfeldkomponente $B_{2z}$ in die zweite Raumrichtung 102 auszugeben. Bei Ausführungsbeispielen der Erfindung weisen die Sensorelemente des ersten Magnetfeldsensors 110 und des zweiten Magnetfeldsensors 120 jeweils vergleichbare Magnetempfmdlichkeiten bezüglich der unterschiedlichen Raumrichtungen 101, 102 auf. Wie in der Fig. 1b gezeigt, sind die beiden Magnetfeldsensoren 110, 120 bezüglich der X-Richtung 101 beabstandet voneinander angeordnet.

Bei typischen Anwendungen wird sich der Abstand der beiden Pixelzellen beispielsweise in einem Bereich von ca. 1 mm bis 10 mm befinden, da das erfindungsgemäße Konzept sehr vorteilhaft bei monolithisch integrierten Systemen einsetzbar ist. Der Abstand von der Mitte des Magneten zur Sensoroberfläche kann sich beispielsweise zwischen 0.5 mm und 100 mm bewegen. Bei einem sehr kleinen Gebermagneten (2 mm x 2 mm x 2 mm) wird sich der sinnvolle Abstand bei ca. 0.5 mm bis 10 mm befinden, während bei einem Ringmagneten (di = 15 mm, da = 25 mm, h = 5 mm) Abstände von 5 mm bis 50 mm sinnvoll sind und bei einem Quadermagneten von (20 mm x 50 mm x 50 mm) auch Abstände von bis zu 100 mm und mehr sinnvoll sein können. Grundsätzlich ist der Abstand zwischen Magnet und Sensor von der Größe des Magneten abhängig.

Die Verarbeitungseinrichtung 130 ist ausgebildet, um die erste Magnetfeldkomponente $B_{1x}$ und die zweite Magnetfeldkomponente $B_{1z}$ miteinander zu kombinieren, um eine erste Kombinationsgröße $B_1$ zu erhalten, und um die dritte Magnetfeldkomponente $B_{2x}$ und die vierte Magnetfeldkomponente $B_{2z}$ miteinander zu kombinieren, um eine zweite Kombinationsgröße $B_2$ zu erhalten (Schritt 133). Die Verarbeitungseinrichtung 130 ist ferner ausgebildet, um basierend auf einem Vergleich der ersten Kombinationsgröße $B_1$ und der zweiten Kombinationsgröße $B_2$ eine Lage des Gebermagneten 105 bezüglich der Sensoranordnung 100 zu ermitteln (Schritt 135). Schließlich ist die Verarbeitungseinrichtung 130 ausgebildet, um basierend auf der ermittelten Lage des Gebermagneten 105 bezüglich der Sensoranordnung 100 und auf einem Vorzeichen einer erfassten Magnetfeldkomponente $B_z$ bezüglich der zweiten Raumrichtung 102 die Magnetisierungsrichtung 107 zu ermitteln (Schritt 137). Die Information über die Magnetisierungsrichtung des Gebermagneten 105 kann schließlich dem Ausgangssignal S' der Verarbeitungseinrichtung 130 zugeordnet werden, bzw. die Verarbeitungseinrichtung 130 kann das die Magnetisierungsrichtung angebende Signal S' bereitstellen.

Bei Ausführungsbeispielen der Erfindung kann die Lage des Gebermagneten 105 bezüglich eines Referenzpunktes 155 der beiden Sensorpositionen 115, 125 festgelegt werden. Wie in der Fig. 1b gezeigt, kann der Referenzpunkt 155 beispielsweise ein Symmetriepunkt sein, der in der Mitte zwischen den beiden Sensörpositionen 115, 125 liegt. Ferner kann dem Referenzpunkt 155 eine Nullpunktposition "0" zugeordnet werden. Bei Ausführungsbeispielen der Erfindung stellt eine Position des Gebermagneten 105 auf der linken Seite des Nullpunkts "0" ("links") eine erste Lage dar, während eine Position des Gebermagneten 105 auf der rechten Seite des Nullpunkts "0" ("rechts") eine zweite Lage darstellt. Die jeweilige Lage bezieht sich hierbei beispielsweise auf die Position des Gebermagneten 105 bezüglich einer Mittelsenkrechten 157 der beiden Sensorpositionen 115, 125 durch den Referenzpunkt 155. Ferner kann der Referenzpunkt 155 insbesondere einen Ursprung des Koordinatensystems 111 darstellen, das in der Zeichenebene durch die linear unabhängigen Raumrichtungen 101, 102 (z.B. X-, Z-Richtungen) aufgespannt wird. Die Y-Richtung 103 ist senkrecht zur Zeichenebene. Insbesondere entsprechen die Magnetfeldkomponenten bezüglich der beiden Raumrichtungen 101, 102, wie im Vorhergehenden beschrieben, den axialen bzw. radialen Komponenten $B_x$, $B_z$, wobei die dazu senkrechte Komponente By beispielsweise vernächlässigbar ist. Aus Symmetriegründen liegt bei Ausführungsbeispielen der Referenzpunkt in der Mitte zwischen den beiden Sensorpositionen. Alternativ dazu könnte jedoch auch ein beliebiger Referenzpunkt bezüglich der Sensoranordnung 100 gewählt werden.

Bei weiteren Ausführungsbeispielen der Erfindung sind der erste Magnetfeldsensor 110 und der zweite Magnetfeldsensor 120 ausgebildet, um jeweils die erste Magnetfeldkomponente $B_{1x}$ und die dritte Magnetfeldkomponente $B_{2x}$ in eine axiale Richtung und die zweite Magnetfeldkomponente $B_{1z}$ und die vierte Magnetfeldkomponente $B_{2z}$ in eine radiale Richtung zu erfassen, wenn der Gebermagnet 105 mit einer Magnetachse 106 beispielsweise entlang einer Verschiebungslinie 165 bezüglich der beiden Magnetfeldsensoren 110, 120 parallel zur X-Richtung 101 verschoben wird.

Bezug nehmend auf eine Teildarstellung 170 der Fig. 1b ist die axiale Richtung durch einen Abstandsvektor $\vec{d}_{12}$ der beiden Sensorpositionen 115, 125 und die radiale Richtung durch einen Richtungsvektor $\vec{s}$, der senkrecht zum Abstandsvektor $\vec{d}_{12}$ ist und einen Schnittpunkt 175 mit der Magnetachse 106 aufweist, definiert.

Bei weiteren Ausführungsbeispielen der Erfindung ist die Verarbeitungseinrichtung 130 ausgebildet, um die erste Magnetfeldkomponente $B_{1x}$ mit der zweiten Magnetfeldkomponente $B_{1z}$ und die dritte Magnetfeldkomponente $B_{2z}$ mit der vierten Magnetfeldkomponente $B_{2z}$ jeweils derart zu kombinieren, dass ein Betrag $|B_1|$ der ersten Kombinationsgröße eine Betragsfunktion $|(B_{1x},B_{1z})|$ und ein Betrag $|B_2|$ der zweiten Kombinationsgröße eine Betragsfunktion $|(B_{2x},B_{2z})|$ darstellen. Somit ist der Betrag $|B_1|$ bzw. der Betrag $|B_2|$ jeweils ein Maß für die gesamte Magnetfeldstärke an der ersten Sensorposition 115 und der zweiten Sensorposition 125, die beispielsweise über folgende Beziehung

$$(1) \qquad |B_1| = \sqrt{B_{1x}^2 + B_{1z}^2}$$

$$(2) \qquad |B_2| = \sqrt{B_{2x}^2 + B_{2z}^2}$$

berechnet werden kann.

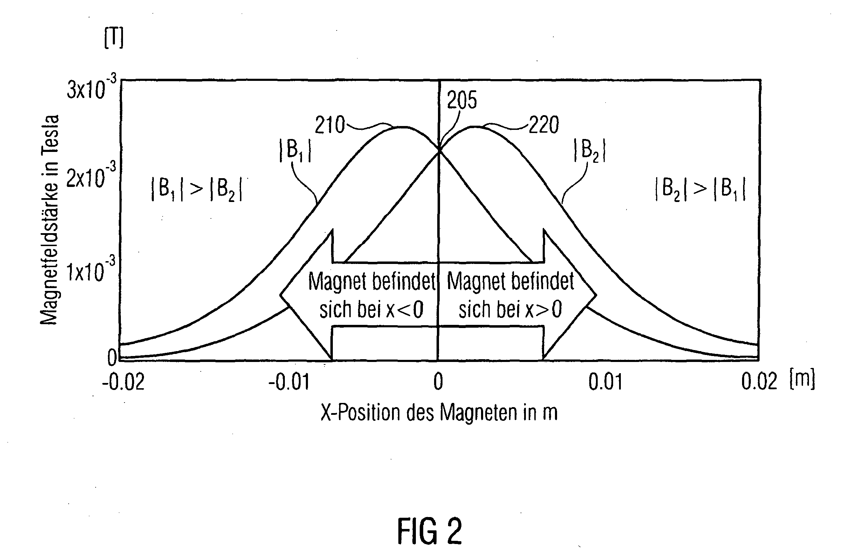

Fig. 2 zeigt beispielhaft Verläufe der Beträge der ersten Kombinationsgröße des ersten Magnetfeldsensors 110 und der zweiten Kombinationsgröße des zweiten Magnetfeldsensors 120 bezüglich einer X-Position des Gebermagneten 105. In Fig. 2 ist beispielhaft auf der vertikalen Achse die Magnetfeldstärke in Tesla und auf der horizontalen Achse die X-Position des Magneten in Meter aufgetragen. Hierbei entspricht die X-Position der Fig. 2 im Wesentlichen einer Position des Gebermagneten 105 auf der linearen Verschiebungslinie 165 der Fig. 1b. Ferner entspricht die in der Fig. 2 gezeigte X-Position Null im Wesentlichen der in der Fig. 1b gezeigten Nullpunktposition "0". Bezug nehmend auf die Fig. 2 weisen die beiden Ausgangssignale typische Magnetfeldstärken zwischen Null und 3 x 10⁻³ T in einem Bereich zwischen - 20 mm und + 20 mm auf. Ferner ist zu erkennen, dass die Verläufe von $|B_1|$ und $|B_2|$ einen Schnittpunkt 205 aufweisen, der im Wesentlichen der X-Position Null zugeordnet ist.

Bei Ausführungsbeispielen der Erfindung ist die Verarbeitungseinrichtung 130 ausgebildet, um eine erste Lage ("links" des Referenzpunktes 155 bzw. der Nullpunktposition "0") zu bestimmen, wenn der Betrag $|B_1|$ der ersten Kombinationsgröße größer als der Betrag $|B_2|$ der zweiten Kombinationsgröße ist, und eine zweite Lage ("rechts" des Referenzpunktes 155 bzw. der Nullpunktposition "0") zu bestimmen, wenn der Betrag $|B_2|$ der zweiten Kombinationsgröße größer als der Betrag $|B_1|$ der ersten Kombinationsgröße ist. Die erste Lage ist dabei durch einen Bereich negativer X-Werte links von der Position des Schnittpunkts 205 und die zweite Lage durch einen Bereich positiver X-Werte rechts von der Position des Schnittpunkts 205 definiert, wie in der Fig. 2 durch die jeweiligen Pfeile mit den Bezeichnungen "Magnet befindet sich bei x < 0" bzw. "Magnet befindet sich bei x > 0" angedeutet.

Bei Ausführungsbeispielen kann somit durch einen Vergleich der Beträge $|B_1|$ und $|B_2|$ der Kombinationsgrößen $B_1$ und $B_2$, die jeweils von den beiden Magnetfeldsensoren 110, 120 geliefert werden, die Lage des Gebermagneten 105 bestimmt und zugeordnet werden. So befindet sich derjenige Sensor, der im Wesentlichen das größere Ausgangssignal liefert bzw. die größere Magnetfeldstärke ermittelt, näher am Gebermagneten 105.

Wie im Vorhergehenden beschrieben, ist die Verarbeitungseinrichtung 130 ferner ausgebildet, um basierend auf der ermittelten Lage des Gebermagneten 105 bezüglich der Sensoranordnung 100 und auf einem Vorzeichen einer erfassten Magnetfeldkomponente ($H_z$) bezüglich der zweiten Raumrichtung 102 die Magnetisierungsrichtung 107 zu ermitteln (Fig. 1b, Schritt 137).

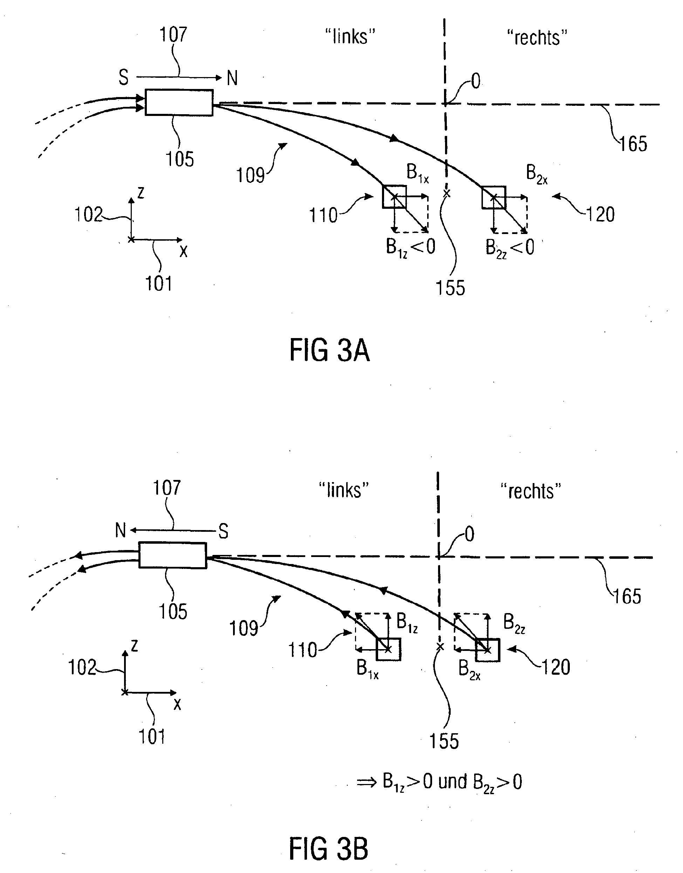

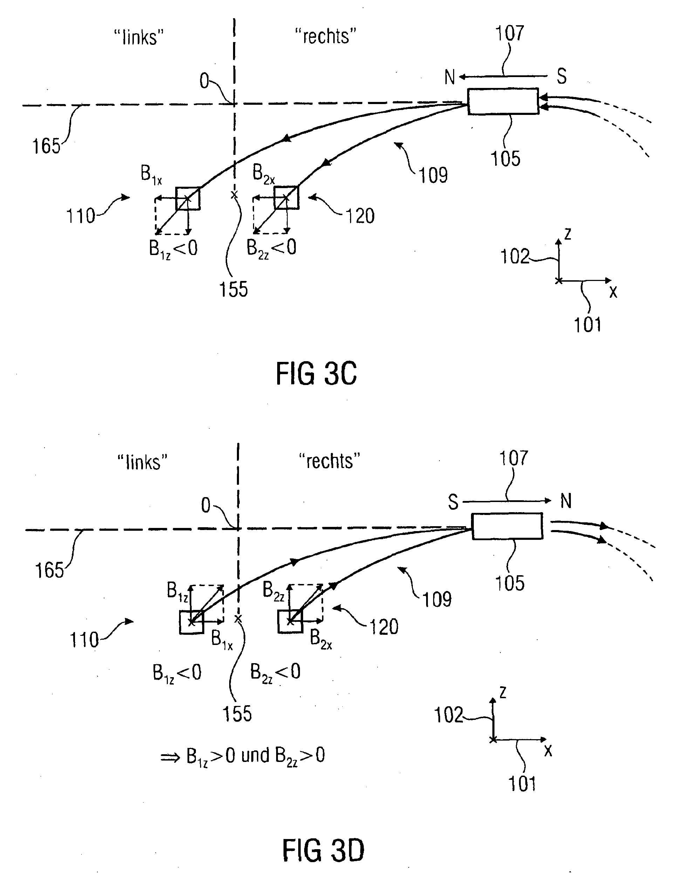

Zur Veranschaulichung zeigen die Fig. 3a bis 3d vier unterschiedliche Anordnungen des Gebermagneten 105 bezüglich des Referenzpunktes 155. In den Fig. 3a bis 3d weist der Gebermagnet 105 einerseits die erste Lage ("links") oder die zweite Lage ("rechts") auf, d.h. er befindet sich entweder auf der linken Seite oder der rechten Seite des Nullpunkts "0" der Verschiebungslinie 165, und andererseits weist der Gebermagnet 105 eine Magnetisierungsrichtung 107 in eine positive oder eine negative X-Richtung 101 auf. Die Magnetfeldlinien 109 verlaufen jeweils entsprechend der Magnetisierungsrichtung 107, wie in den Fig. 3a bis 3d gezeigt, wobei die Magnetisierungsrichtung 107 durch einen Nordpol (N) und einen Südpol (S) des Gebermagneten 105 gegeben ist. Insbesondere weist in den Fig. 3a, 3b der Gebermagnet 105 die erste Lage auf, während er in den Fig. 3c, 3d die zweite Lage aufweist. Ferner zeigt in den Fig. 3a, 3d die Magnetisierungsrichtung 107 des Gebermagneten 105 in die positive X-Richtung, während sie in den Fig. 3b, 3c in die negative X-Richtung zeigt.

Bezug nehmend auf die Fig. 3a-3d kann nun basierend auf der Kenntnis der Lage (d. h. Gebermagnet auf der linken Seite oder der rechten Seite) die Magnetisierungsrichtung 107 von einer mittels des ersten Magnetfeldsensors 110 oder des zweiten Magnetfeldsensors 120 gemessenen Z-Komponente $B_{1z}$, $B_{2z}$ des Magnetfelds bzw. $B_z$ abgeleitet werden.

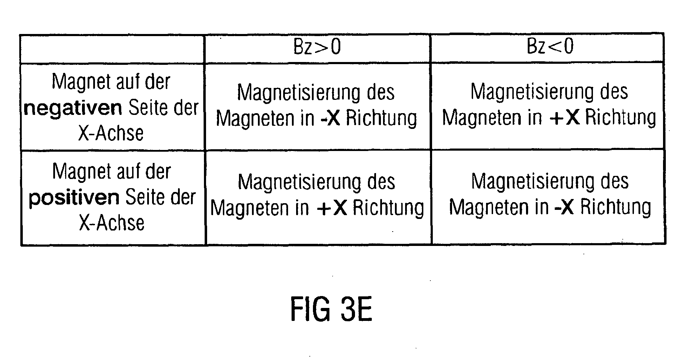

Bei weiteren Ausführungsbeispielen der Erfindung ist die Verarbeitungseinrichtung 130 ausgebildet, um, falls die erste Lage bestimmt wurde, bei einem positiven Vorzeichen der zweiten Magnetfeldkomponente $B_{1z}$ oder der vierten Magnetfeldkomponente $B_{2z}$ eine erste Magnetisierungsrichtung zu ermitteln, und, falls die zweite Lage bestimmt wurde, eine zweite Magnetisierungsrichtung zu ermitteln, und, falls die erste Lage bestimmt wurde, bei einem negativen Vorzeichen der zweiten Magnetfeldkomponente $B_{1z}$ oder der vierten Magnetfeldkomponente $B_{2z}$ die zweite Magnetisierungsrichtung zu ermitteln, und, falls die zweite Lage bestimmt wurde, die erste Magnetisierungsrichtung zu ermitteln. Dabei zeigt die erste Magnetisierungsrichtung in die negative X-Richtung (siehe Fig. 3b, 3c), während die zweite Magnetisierungsrichtung in die positive X-Richtung zeigt (siehe Fig. 3a, 3b). Die Tabelle der Fig. 3e fasst die beschriebenen vier Fälle für die möglichen Anordnungen, die sich abhängig von der Lage und dem Vorzeichen der Z-Komponente $B_z$ ergeben, zusammen.

Für eine robuste Umsetzung der gerade beschriebenen Vorgehensweise kann in der Praxis der Bereich um den Null-Punkt (Referenzpunkt) herum gesondert behandelt werden, da es durch Asymmetrien des Magneten oder sonstige Nichtidealitäten vorkommen kann, dass sich der Schnittpunkt beispielsweise der beiden Betragsfunktionen (Schnittpunkt 205 in der Fig. 2) für die Erkennung der Seite, auf der sich der Magnet befindet, nicht exakt an der gleichen Position befindet, wie die Nullstelle der Z-Komponente des Magnetfelds. Dies würde unter Umständen zu inkorrekten Entscheidungen in der Mitte des Messbereichs führen.

Um das System bezüglich dieses Sonderfalls robust zu machen, sollte die Magnetisierungserkennung in der "Nähe" der Position Null direkt aus der X-Komponente des Magnetfelds abgeleitet werden. Als Kriterium, wann sich der Magnet in der Nähe der Position Null befindet, kann beispielsweise ein Vergleich der Beträge der Feldkomponenten $B_x$ und $B_z$ herangezogen werden.

Bei weiteren Ausführungsbeispielen der Erfindung ist die Verarbeitungseinrichtung 130 ausgebildet, um zu bestimmen, ob sich der Gebermagnet 105 innerhalb eines Mittenbereichs 410 um den Referenzpunkt 155 der Sensoranordnung 100 befindet. Dazu wird eine von dem ersten Magnetfeldsensor 110 oder dem zweiten Magnetfeldsensor 120 erfasste Magnetfeldkomponente $B_x$ bezüglich der ersten Raumrichtung 101 oder davon abgeleitete Werte mit einer von dem ersten Magnetfeldsensor 110 oder dem zweiten Magnetfeldsensor 120 erfassten Magnetfeldkomponente $B_z$ bezüglich der zweiten Raumrichtung 102 oder davon abgeleiteten Werten verglichen. Falls der Vergleich z.B. ergibt, dass sich der Gebermagnet 105 innerhalb des Mittenbereichs 410 befindet, so wird die Magnetisierungsrichtung 107 basierend auf einem Vorzeichen einer erfassten Magnetfeldkomponente $B_x$ (Längskomponente bzw. axiale Komponente) bezüglich der ersten Raumrichtung 101 ermittelt. Falls sich der Gebermagnet 105 jedoch außerhalb des Mittenbereichs 410 befindet, so wird die Magnetisierungsrichtung 107 gemäß der anhand der Fig. 2 und der Fig. 3a-d beschriebenen Vorgehensweise ermittelt.

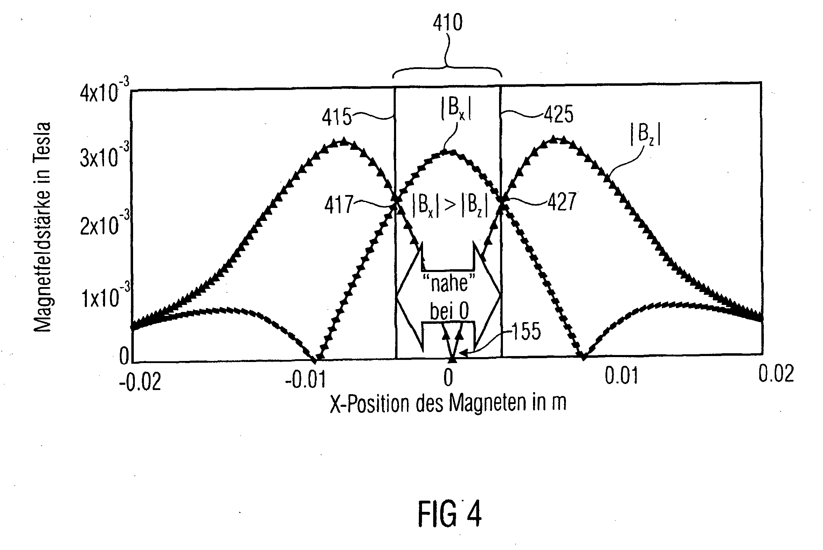

In diesem Zusammenhang zeigt Fig. 4 beispielhafte Verläufe der Beträge $|B_x|$ und $|B_z|$ mit typischen Magnetfeldstärken zwischen 0 und 4 x $10^{-3}$ T bezüglich der X-Position des Gebermagneten 105 im Bereich von etwa -20 mm bis +20 mm. Die Fig. 4 zeigt einen Mittenbereich 410, der den Referenzpunkt 155 umgibt und durch die Bedingung $|B_x| > |B_z|$ definiert ist. In diesem Bereich 410 ist somit die Magnetfeldstärke ($B_x$) der X-Komponente größer als die Magnetfeldstärke ($B_z$) der Z-Komponente. Der Mittenbereich 410 ist in der Fig. 4 ferner durch einen Doppelpfeil, der mit "nahe bei Null" bezeichnet und durch zwei Positionen 415, 425 entsprechend zweier Schnittpunkte 417, 427 von $|B_x|$ und $|B_z|$ begrenzt ist, dargestellt. Insbesondere erstreckt sich der Mittenbereich 410 beispielsweise von etwa -5 mm bis +5 mm. An dieser Stelle wird darauf hingewiesen, dass zur Definition des Mittenbereichs 410 auch andere geeignete Verläufe, beispielsweise abgeleitet von den Verläufen der Beträge $|B_x|$ und $|B_z|$, verwendet werden können.

Bei weiteren Ausführungsbeispielen der Erfindung ist die Verarbeitungseinrichtung 130 ausgebildet, um bei einem positiven Vorzeichen der erfassten Magnetfeldkomponente $B_x$ bezüglich der ersten Raumrichtung 101 die erste Magnetisierungsrichtung des Gebermagneten 105 zu ermitteln und bei einem negativen Vorzeichen der erfassten Magnetfeldkomponente $B_x$ bezüglich der ersten Raumrichtung 101 die zweite Magnetisierungsrichtung des Gebermagneten 105 zu ermitteln, wenn ein Betrag $|B_x|$ der erfassten Magnetfeldkomponente bezüglich der ersten Raumrichtung 101 größer als ein Betrag $|B_z|$ der erfassten Magnetfeldkomponente bezüglich der zweiten Raumrichtung 102 ist.

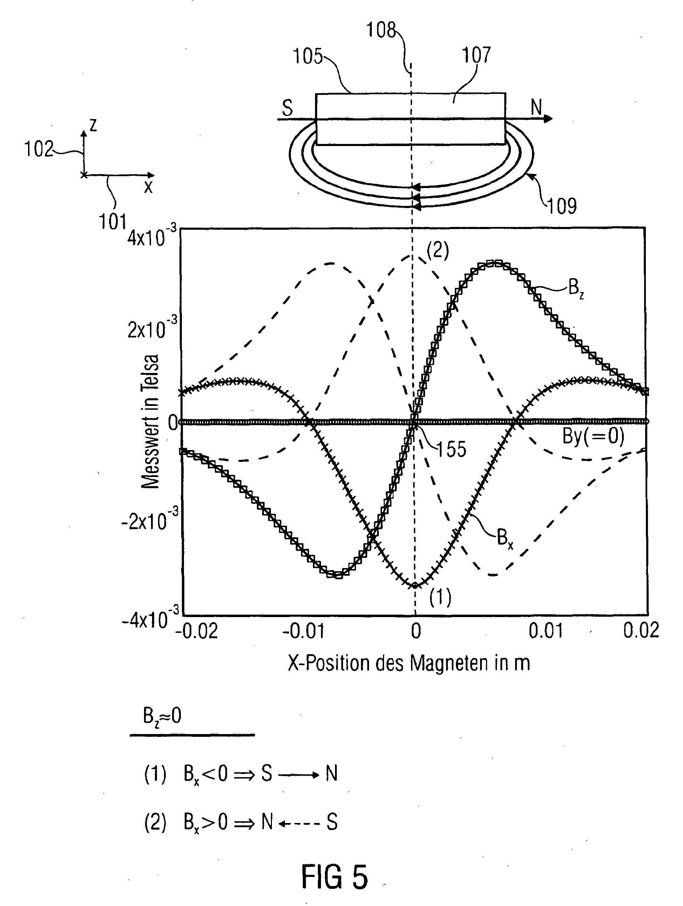

Fig. 5 zeigt zur Veranschaulichung eine beispielhafte Situation, bei der sich der Gebermagnet 105 insbesondere in dem in der Fig. 4 gezeigten Mittenbereich befindet, d.h. in der Nähe der X-Position "Null". Dies ist dadurch gekennzeichnet, dass eine Symmetrieachse 108 (gestrichelte Linie) des Gebermagneten 105 im Wesentlichen durch den Referenzpunkt 155 verläuft. Im Folgenden können zwei Fälle (1), (2) betrachtet werden. Zeigt die Magnetisierungsrichtung 107 (|S - N|-Polanordnung in dem Magneten) in die positive X-Richtung (Fall 1), so zeigen die Magnetfeldlinien 109 in der Nähe der Nullpunktposition im Wesentlichen in die negative X-Richtung. Zeigt die Magnetisierungsrichtung 107 hingegen in die negative X-Richtung (Fall 2), so zeigen die Magnetfeldlinien 109 in der Nähe der Nullpunktposition im Wesentlichen in die positive X-Richtung. Der Betrag $|B_z|$ einer Z-Komponente $B_z$ des Magnetfelds verschwinden praktisch in der Nähe von Null. In der Fig. 5 ist der Fall (1) durch die Messwerte mit den durchgezogenen Linien dargestellt, während der Fall (2) durch die gestrichelten Linien dargestellt ist. Ferner sind die erste Magnetisierungsrichtung durch die negative X-Richtung und die zweite Magnetisierungsrichtung durch die positive X-Richtung definiert.

In anderen Worten, wenn insbesondere der Betrag von $B_x$ oder ein davon abgeleiteter Wert, wie beispielsweise $Bx^2$, größer ist als der Betrag von $B_z$ bzw. ein davon abgeleiteter Wert, wie beispielsweise $B_z^2$, dann befindet man sich in der Nähe der Position Null, und die Magnetisierungsrichtung kann direkt aus dem invertierten Vorzeichen der X-Komponente des Magnetfelds ermittelt werden.

Bei weiteren Ausführungsbeispielen der Erfindung kann die Verarbeitungseinrichtung 130 ausgebildet sein, um den Betrag $|B_x|$ und den Betrag $|B_z|$ jeweils über eine Betragsfunktion angewandt auf die erste Magnetfeldkomponente $B_{1x}$ oder die dritte Magnetfeldkomponente $B_{2x}$ bzw. die zweite Magnetfeldkomponente $B_{1z}$ oder die vierte Magnetfeldkomponente $B_{2z}$ ermittelt werden. Bezug nehmend auf die Fig. 4 kann dabei beispielsweise $|B_x|$ oder $|B_z|$ mit einem Gewichtungsfaktor gewichtet werden, so dass der Mittenbereich 410 um den Referenzpunkt 155 verändert, z.B. verkleinert wird. Wählt man bei weiteren Ausführungsbeispielen der Erfindung einen Gewichtungsfaktor zwischen 0,25 und 1 für $|B_x|$, so werden die entsprechenden Messwerte bezüglich der Y-Achse gestaucht, und die beiden Positionen 415, 425 entsprechend der Schnittpunkte 417, 427 verschieben sich in Richtung des Referenzpunktes 155, d.h. der Mittenbereich 410 um den Referenzpunkt 155 wird kleiner.

Im Sinne einer robusten Ausgestaltung der Erfindung kann es daher von Vorteil sein, vor dem Vergleich einen der beiden Beträge mit einem Gewichtungsfaktor zu versehen. Insbesondere ein Gewichtungsfaktor bei der X-Komponente zwischen 0,25 und 1 bringt eine weitere Vergrößerung des Verfahrbereichs. Gleichzeitig wird dabei der Ausschlussbereich in der Nähe von Null kleiner.

Wie man in der Figur 4 an den Rändern (links und rechts) erkennen kann, gibt es auch am Rand Bereiche in denen der Betrag Bx wieder größer wird als der Betrag Bz. Dies ist aber das Kriterium für den Bereich ‚Nahe bei Null' und würde dann in diesen Randbereichen zu einer falschen Magnetrichtungsentscheidung führen. Durch einen Faktor kleiner als 1 bei der x-Komponente wird dieser Schnittpunkt weiter nach Außen wandern und der nutzbare Verfahrbereich wird größer.

Bei weiteren Ausführungsbeispielen der Erfindung kann eine weitere Gewichtung von ein oder zwei Komponenten vor der Betragsberechnung bei den beiden Sensorpositionen für die Entscheidung, auf welcher Seite sich der Magnet befindet, zusätzlich die Robustheit des Systems erhöhen. Beispielsweise können bereits bei einer Verdoppelung der Länge des Magneten in X-Richtung bei einer normalen Betragsfunktion (ohne Gewichtung) zwei Maxima und ein Minimum auftreten. Die Entscheidung, auf welcher Seite sich der Magnet befindet, wird dann unter Umständen in der Mitte des Verfahrbereichs falsch getroffen, wenn die unzulässigen Bereiche nicht vollständig vom Nahbereich (= "nahe bei Null") erfasst werden.

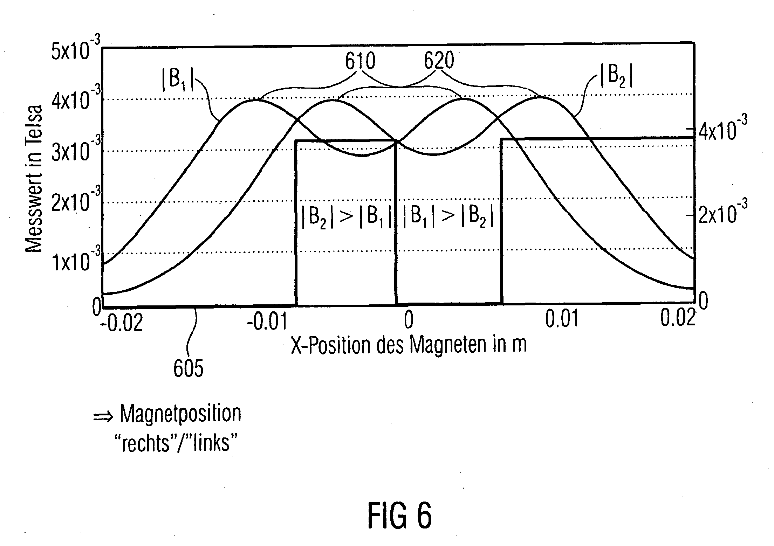

Solch ein Doppelmaximum ist beispielhaft in der Fig. 6 gezeigt. Dabei entsprechen die Verläufe $|B_1|$ und $|B_2|$ der Fig. 6 im Wesentlichen derjenigen der Fig. 2, wobei in der Fig. 2 jeder Verlauf nur ein Maximum 210 bzw. 220 und in der Fig. 6 jeder Verlauf jeweils zwei Maxima (Doppelmaximum 610 bzw. 620) aufweist. In der Fig. 6 ist ferner eine beispielhafte Vergleichsfunktion 605 zur Bestimmung der Magnetposition gezeigt, die beispielsweise ein Minimum (z.B. 0 T) annimmt, wenn der Betrag $|B_1|$ der ersten Kombinationsgröße größer als der Betrag $|B_2|$ der zweiten Kombinationsgröße ist, und ein Maximum (z.B. > 3 x $10^{-3}$ T), wenn die Bedingung $|B_2| > |B_1|$ erfüllt ist. Dabei entspricht das Minimum der Vergleichsfunktion 605 insbesondere der ersten Lage ("links"), während das Maximum der Vergleichsfunktion 605 der zweiten Lage ("rechts") des Gebermagneten 105 entspricht. Wie in der Fig. 6 zu erkennen, ist im Fall des Doppelmaximums eine eindeutige Lagebestimmung erschwert oder nicht möglich.

Bei weiteren Ausführungsbeispielen der Erfindung ist die Verarbeitungseinrichtung 130 daher ausgebildet, um die erfasste Magnetfeldkomponente $B_x$ oder die erfasste Magnetfeldkomponente $B_z$ mit einem weiteren Gewichtungsfaktor zu gewichten, so dass das Doppelmaximum der Betragsfunktion vermieden wird. Insbesondere kann beispielsweise die erfasste Magnetfeldkomponente $B_z$ mit dem weiteren Gewichtungsfaktor kleiner oder gleich 0,75 gewichtet werden.

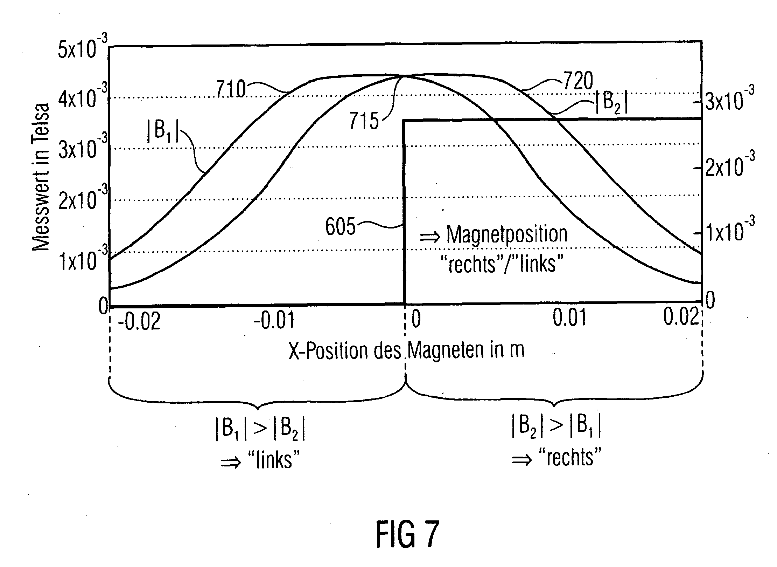

Fig. 7 zeigt ein beispielhaftes Ergebnis einer solchen Gewichtung, bei der die Doppelmaxima 610, 620 jeweils auf ein Maximum 710 bzw. 720 reduziert wurden. In der Fig. 7 entsprechen die Verläufe $|B_1|$ und $|B_2|$ im Wesentlichen denjenigen der Fig. 2, wobei jedoch beide Verläufe aufgrund der Gewichtung jeweils ein bezüglich der X-Achse breiteres Maximum 710 und 720 aufweisen. Trotz dieser Verbreiterung der Maxima 710, 720 lässt sich jedoch die Lage des Gebermagneten 105 eindeutig, beispielsweise unter Zuhilfenahme der Vergleichsfunktion 605, bestimmen. Im Allgemeinen sollten die Gewichtsfunktionen so gewählt werden, dass die Verläufe $|B_1|$ und $|B_2|$ nur einen Schnittpunkt 715 aufweisen.

Insbesondere ist hier eine Erniedrigung der Gewichtung der Z-Komponente vor der Betragsberechnung für beide Sensorpositionen von Vorteil. Bereits ein Faktor von beispielsweise 0,75 für die Z-Komponente vor der Betragsberechnung beseitigt den Doppelhöcker bei den meisten Anwendungsfällen vollständig.

Zusammenfassend gesagt kann durch eine niedrigere Gewichtung der Z-Komponente das Doppelmaximum auf ein Maximum reduziert werden. Dies erhöht die Robustheit des Systems, in dem nun eine deutlich größere Anzahl an Magnetgeometrien für die Positionsmessung verwendet werden können.

Bei weiteren Ausführungsbeispielen der Erfindung ist die Verarbeitungseinrichtung 130 ausgebildet, um die Betragsfunktion mittels eines CORDIC-Algorithmus (CORDIC = Coordinate Rotation Digital Computer) zu berechnen. Der CORDIC-Algorithmus ist ein effizienter iterativer Algorithmus, der beispielsweise zur Berechnung einer trigonometrischen Funktion oder der Betragsfunktion verwendet werden kann. Die Berechnung der Betragsfunktion mittels des CORDIC-Algorithmus kann sowohl im dreidimensionalen Raum als auch in der zweidimensionalen Ebene durchgeführt werden.

Bei weiteren Ausführungsbeispielen der Erfindung gibt es die folgenden zwei möglichen Vereinfachungen bei der Umsetzung des CORDIC-Algorithmus. Die erste Vereinfachung ergibt sich, wenn die Mittelsenkrechte des Sensors die Magnetachse schneidet und die Y-Komponente des Magnetfelds (d.h. die Komponente By in Richtung der Y-Achse 103 entsprechend der Fig. 1) somit in allen Positionen des Verfahrwegs näherungsweise Null ist. Dann kann die Betragsbildung für die Erkennung der Seite, auf der sich der Magnet befmdet, auf die Betragsbildung in der Ebene reduziert werden, was eine deutliche Vereinfachung der Rechnung bedeutet.

Die zweite Vereinfachung ergibt sich aufgrund der Tatsache, dass der letzte Teil der Betragsrechnung (das Ziehen der Wurzel) entfallen kann, da nur ein Vergleich zweier identisch berechneter Beträge stattfindet. Entsprechend kann, wenn zur Betragsberechnung der CORDIC-Algorithmus verwendet wird, eine Korrektur des CORDIC-Faktors in der Ebene gemäß der ersten Vereinfachung entfallen oder muss im Dreidimensionalen nur einmal erfolgen.

Obwohl bei der Richtungserkennung bzw. dem Bestimmen der Magnetisierungsrichtung absolute Magnetfeldwerte eingehen, ist eine Nutzung dieser Vorgehensweise auch bei Gradienten-basierten Positionsmesssystemen sinnvoll.

Bei weiteren Ausführungsbeispielen der Erfindung kann bei solchen Systemen die Verarbeitungseinrichtung 130 ausgebildet sein, um basierend auf der ersten Magnetfeldkomponente $B_{1x}$ und der dritten Magnetfeldkomponente $B_{2x}$ einen ersten Gradienten bezüglich der ersten Raumrichtung (X-Richtung 101) und basierend auf der zweiten Magnetfeldkomponente $B_{1z}$ und der vierten Magnetfeldkomponente $B_{2z}$ einen zweiten Gradienten bezüglich der ersten Raumrichtung unter Verwendung eines Abstands $d_{12}$ (siehe Fig. 1a) der beiden Sensorpositionen 115, 125 zu ermitteln. Der Gradient kann dabei beispielsweise über einen Differenzquotienten berechnet werden. Es ergibt sich durch den Algorithmus lediglich eine Begrenzung der maximal zulässigen Störmagnetfeldgröße, die durch den kleinsten Magnetfeldwert am Rande des Verfahrbereichs vorgegeben wird.

Bei Ausführungsbeispielen kann somit eine Vermessung eines Magnetfelds an wenigstens zwei unterschiedlichen Orten erfolgen, so dass räumliche Magnetfeldfeldänderungen bestimmt werden können. Über die Magnetfeldfeldänderungen lassen sich räumliche Verschiebungen oder Auslenkungen noch genauer messen bzw. erfassen, zu denen auch Verkippungen gehören.

Insbesondere kann dadurch eine räumliche Änderung eines Magnetfelds des Gebennagneten bestimmt werden, wodurch sich Störgrößen effizient kompensieren lassen und zusätzliche Komponenten, wie beispielsweise Auslenkungen (Verkippungen oder Verdrehungen), bestimmen lassen. Weitere Ausführungsbeispiele erlauben somit durch Einsatz mehrdimensionaler Magnetfeldsensoren die mehrdimensionale Vermessung eines Magnetfelds. Da in verschiedenen Raumrichtungen an mehreren Orten gemessen werden kann, können so auch Flussdichteveränderungen entlang unterschiedlicher Raumrichtungen bestimmt werden. Dies erlaubt insbesondere die Bestimmung eines Gradienten des Gebermagnetfelds. Durch die Bestimmung des Gradienten kann die Vermessung des Magnetfelds genauer und weniger störungsbehaftet implementiert werden. Beispielsweise lässt sich durch Bestimmung des Gradienten eines Magnetfelds auch eine beliebige Verkippung oder Auslenkung des Gebermagneten relativ zur Sensoranordnung bestimmen.

Bei weiteren Ausführungsbeispielen der Erfindung kann schließlich basierend auf einer Information über die Magnetisierungsrichtung 107 eine Position des Gebermagneten 101 bezüglich des Referenzpunktes 155 ermittelt werden.

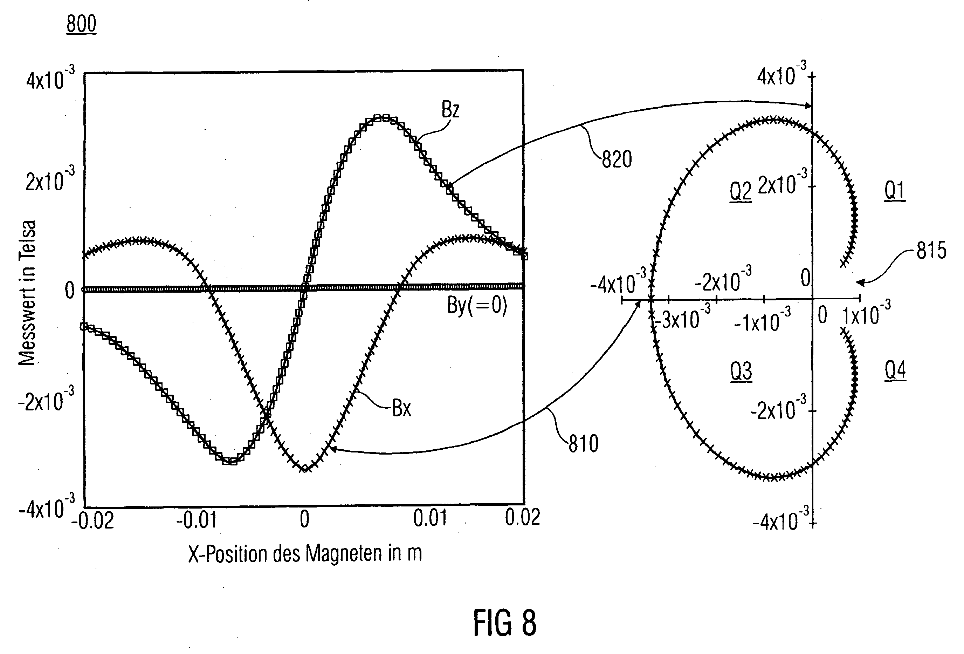

Dazu kann eine erfindungsgemäße Auswertung verwendet werden, die sich von der im Stand der Technik beschriebenen Variante im Wesentlichen darin unterscheidet, dass nicht zuerst der Quotient aus den erfassten Magnetfeldkomponenten $B_x$ und $B_z$ gebildet wird, sondern beide Komponenten verwendet werden, um eine sogenannte 4-Quadranten-Winkelberechnung 800 durchzuführen (siehe Fig. 8). Wie in der Fig. 8 zu sehen, stellen die beiden Komponenten jeweils Wertepaare in vier Quadranten (z. B. Q1, Q2, Q3 und Q4) dar. Hierbei ist die Zuordnung der Komponenten zu den Quadranten durch die Pfeile 810, 820 angedeutet.

Ein wesentlicher Vorteil bei der 4-Quadranten-Winkelberechnung ist, dass im Gegensatz zur Auswertung über das Verhältnis zweier Feldkomponenten bzw. über eine Berechnung dessen Arcustangens-Funktion, wie beispielsweise entsprechend der Fig. 12, keine Unstetigkeitsstelle 39 bei den Winkeln +/-90° vorkommt. Ferner kann durch die 4-Quadranten-Winkelberechnung eine mehrdeutige Auswertung des Signals vermieden werden, da die Zuordnung zwischen den beiden Komponenten und den beispielsweise vier Quadranten Q1-Q4 eindeutig ist. Aufgrund dieser eindeutigen Zuordnung kann bei Ausführungsbeispielen der Erfindung eine entsprechende Steuerung der Vorzeichen abhängig von dem jeweiligen Quadranten bei der Berechnung der Arkustangensfunktion bzw. der Betragsfunktion in einem sogenannten "Vectoring"-Betriebsmodus des CORDIC-Algorithmus gewährleistet werden.

Damit ist nun der maximal mögliche Verfahrbereich, den der Gebermagnet in Verbindung mit den Magnetfeldsensoren bietet, möglich. Die Unabhängigkeit von der Temperatur bleibt erhalten, da sich der Positionswert aus der Magnetfeldrichtung ergibt und die Richtung der Feldlinien eines Magneten sich auch mit variabler Magnettemperatur nicht ändert. Durch geschickte Wahl der Vorzeichen kann die Winkelberechnung so aufgesetzt werden, dass ein Winkel von 0° gerade der Position 0 mm entspricht. Damit ist eine bei einer Winkelberechnung unvermeidliche Sprungstelle 815 an die Bereichsgrenzen nach außen verlagert. Da der entsprechende Magnetfeldwinkel in der Applikation nicht auftritt, tritt die Sprungstelle hier nicht störend in Erscheinung.

Falls man den Magneten oder den Sensor um 180° gedreht einbaut, so verschiebt sich die Sprungstelle der Winkelberechnung in den Positions-Nullpunkt (d.h. in die Mitte des Messbereichs). Dies würde bei vielen Anwendungen nicht nur störend sein, sondern auch die Anwendung dieses Verfahrens verhindern. Ferner würde ein solches Verfahren insbesondere bei Anwendungen, in denen die Einbaulage des Magneten zum Sensor nicht vorherbestimmt ist, auch ein Ausschlusskriterium darstellen. In den Hauptanwendungen Automatisierungstechnik wäre ein solcher Positionssensor daher nicht brauchbar. Aus diesem Grund sind Systeme mit maximalem Verfahrbereich generell nicht weit verbreitet, da bei ihnen sehr genau auf die Magnetisierungsrichtung des Magneten geachtet werden muss.

Mit dem Wissen über die Magnetisierungsrichtung lässt sich jedoch bei Ausführungsbeispielen der Erfindung die 4-Quadranten-Winkelberechnung sehr einfach so steuern, dass die Sprungstelle immer an den Bereichsenden und niemals in der Mitte des Bereichs (Nullpunkt) liegt.

Zusammenfassend gesagt lässt sich die gesamte Vorgehensweise zur Bestimmung der Magnetisierungsrichtung übersichtlich in einem Flussdiagramm darstellen.

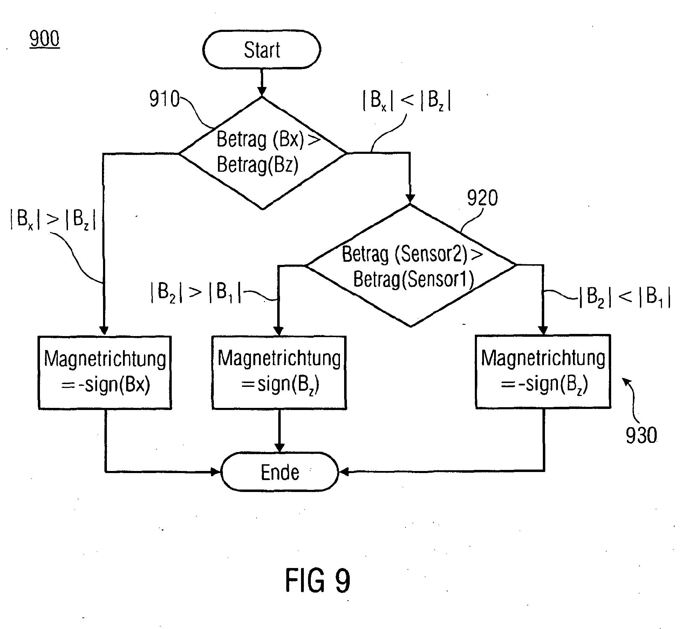

Fig. 9 zeigt ein Flussdiagramm eines Verfahrens 900 zur Ermittlung der Lage - bzw. der Magnetisierungsrichtung des Gebermagneten 105. Das Verfahren 900 weist insbesondere zwei Entscheidungsblöcke 910, 920 auf, wobei der Block 910 und der Block 920 prinzipiell unabhängig voneinander oder auch nacheinander ablaufen können. Dabei entsprechen die Blöcke 910, 920 im Wesentlichen Verfahrensschritten, die im Zusammenhang mit der Fig. 4 (Block 910) bzw. der Fig. 2 (Block 920) ausführlich beschrieben wurden. Basierend auf den ermittelten Entscheidungen durchläuft das Verfahren 900 die entsprechenden Zweige, die jeweils von den Blöcken 910, 920 ausgehen. In weiteren darauffolgenden Verfahrensschritten 930 wird die Magnetisierungsrichtung, wie im Vorhergehenden ausführlich beschrieben, entweder basierend auf dem Vorzeichen der X-Komponente ($B_x$) oder auf dem Vorzeichen der Z-Komponente ($B_z$) ermittelt. Es sind somit zwei Entscheidungen nötig, um die Magnetisierungsrichtung dann aus dem Vorzeichen einer Komponente des gemessenen Magnetfelds ableiten zu können.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray-Disk, einer CD, eines ROM, eines PROM, eines EPROM, eines EEPROM oder eines Flash-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium Computer-lesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogramm auf einem Computer abläuft. Der Programmcode kann beispielsweise auch auf einem maschinenlesbaren Träger gespeichert sein. Bei manchen Ausführungsbeispielen kann ein programmierbares Logikbauelement (beispielsweise ein feldprogrammierbares Gatter-Array, ein FPGA) dazu verwendet werden, manche oder alle Funktionalitäten der hierin beschriebenen Verfahren durchzuführen. Bei manchen Ausführungsbeispielen kann ein feldprogrammierbares Gatter-Array mit einem Mikroprozessor zusammenwirken.

Die vorliegende Erfindung schafft somit ein Konzept, mit dem die Lage der Magnetisierungsrichtung des Magneten im Betrieb erkannt werden kann. Wenn man die Magnetisierungsrichtung kennt, dann kann das Vorzeichen der X-Komponente des Magnetfelds im Bedarfsfall ohne weiteres umgekehrt werden, so dass beispielsweise bei einer 4-Quadranten-Winkelberechnung der Winkel 0° wieder mit der Position 0 (vgl. Fig. 8) zusammenfällt. Unabhängig von der Magnetisierungsrichtung des verwendeten Magneten liegt damit die störende Sprungstelle immer an den Grenzen des Messbereichs.

Ein Vorteil der vorliegenden Erfindung ist, dass die Auswertung so durchgeführt werden kann, dass ein möglichst großer Verfahrbereich des Gebermagneten relativ zu der Sensoranordnung möglich ist, und die Messung robust ist, d.h. unabhängig von der Magnettemperatur, der Sensortemperatur und anderen Störeinflüssen.

Die vorliegenden Erfindung ist auch dahin gehend vorteilhaft, dass bei einer nicht bekannten Anordnung des Gebermagneten bezüglich der Sensoranordnung oder bei einem Verdrehen des Gebermagneten um 180° bezüglich der beiden Magnetfeldsensoren die Lage des Gebermagneten im Betrieb erkannt werden kann, was wiederum eine automatische Erkennung der Magnetisierungsrichtung des Gebermagneten ermöglicht.

Ein weiterer Vorteil der vorliegenden Erfindung ist, dass sich beispielsweise die 4-Quadranten-Winkelberechnung einfach zur Positionsmessung mit maximalem Verfahrbereich einsetzen lässt. Unabhängig von der Magnetisierungsrichtung liefert das Messsystem den richtigen Positionswert. Wenn man mit der Magnetisierungsrichtung auch das Vorzeichen des Positionswertes geeignet umschaltet, kann das Messsystem so konfiguriert werden, dass der Sensor oder der Magnet als Bezugssystem dient. Dabei spielt im ersten Fall die Magnetisierungsrichtung für den Positionsmesswert keine Rolle, während im zweiten Fall eine Verdrehung des Magneten um 180° genau den negativen Positionsmesswert liefert. Diese Möglichkeit, das Bezugssystem auszuwählen, ergibt sich nur in Verbindung mit der vorliegenden Erfindung.

Das Hauptanwendungsgebiet der vorliegenden Erfindung befindet sich im Bereich der Automatisierungstechnik. Dort werden Pneumatikzylinder in den unterschiedlichsten Bauformen eingesetzt. Diese Pneumatikzylinder besitzen bereits heute in weit über 90% der Fälle einen im Kolben integrierten Magneten, um magnetische Endschalter auslösen zu können. Immer häufiger werden die vorhandenen Endschalter im Sinne einer besseren Produktionsüberwachung und Erhöhung der Produktionsqualität durch linear messende Sensoren ersetzt.

Bei dieser Nachrüstung ist nicht bekannt, in welcher Magnetisierungsrichtung der im Kolben vorhandene Magnet in den Pneumatikzylinder eingebaut wurde. Daneben soll es möglich sein, den linear messenden Nachrüstsensor in beiden möglichen Lagen einzubauen. Der Entscheidungsgrund für eine der beiden möglichen Einbauvorlagen wird meist von den konstruktiven Gegebenheiten im Gesamtsystem beeinflusst. Beispielsweise soll das Anschlusskabel möglichst direkt zur Auswerteeinheit geführt werden.

In allen Fällen soll der Sensor nach dem Einbau ohne aufwändige Kalibrierarbeiten sofort einsatzbereit sein. In diesem Fall erlaubt es die Erfindung, einen Positionssensor mit dem maximal möglichen Verfahrbereich für diese Anwendung zu realisieren.

Die vorliegende Erfindung lässt sich vorteilhaft auch in vielen anderen Bereichen einsetzen, in denen es auf eine einfach anzuwendende und gleichzeitig robuste Positionsmessung ankommt. Auch in anderen Bereichen, in denen eine 4-Quadranten-Winkelberechnung für die Positionsberechnung eingesetzt werden könnte, lässt sich die Erfindung vorteilhaft zur Vereinfachung der Fertigung und zur Reduktion der möglichen Fehlerquellen einsetzen. Gemäß einem Aspekt weist eine Sensoranordnung 100 zum Ermitteln einer Magnetisierungsrichtung 107 eines Gebermagneten 105 folgende Merkmale auf: einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102; einen zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102; wobei der erste Magnetfeldsensor 110 und der zweite Magnetfeldsensor 120 beabstandet voneinander angeordnet sind; und eine Verarbeitungseinrichtung 130, die ausgebildet ist, um die erste Magnetfeldkomponente $B_{1x}$ und die zweite Magnetfeldkomponente $B_{1z}$ miteinander zu kombinieren, um eine erste Kombinationsgröße $B_1$ zu erhalten; um die dritte Magnetfeldkomponente $B_{2x}$ und die vierte Magnetfeldkomponente $B_{2z}$ miteinander zu kombinieren, um eine zweite Kombinationsgröße $B_2$ zu erhalten; um basierend auf einem Vergleich der ersten Kombinationsgröße $B_1$ und der zweiten Kombinationsgröße $B_2$ eine Lage des Gebermagneten 105 bezüglich der Sensoranordnung 100 zu ermitteln; und um basierend auf der ermittelten Lage des Gebermagneten 105 bezüglich der Sensoranordnung 100 und auf einem Vorzeichen einer erfassten Magnetfeldkomponente $B_z$ bezüglich der zweiten Raumrichtung 102 die Magnetisierungsrichtung 107 zu ermitteln.

Der erste Magnetfeldsensor 110 und der zweite Magnetfeldsensor 120 sind ferner ausgebildet, um jeweils die erste Magnetfeldkomponente $B_{1x}$ und die dritte Magnetfeldkomponente $B_{2x}$ in einer axialen Richtung und die zweite Magnetfeldkomponente $B_{1z}$ und die vierte Magnetfeldkomponente $B_{2z}$ in einer radialen Richtung bezüglich einer Relativbewegungsrichtung des Gebermagneten 105 bezüglich der Sensoranordnung zu erfassen.

Gemäß einem weiteren Aspekt ist die Verarbeitungseinrichtung 130 der Sensoranordnung ausgebildet, um eine erste Lage des Gebermagneten 105 bezüglich der Sensoranordnung zu bestimmen, wenn ein Betrag $|B_1|$ der ersten Kombinationsgröße größer als ein Betrag $|B_2|$ der zweiten Kombinationsgröße ist, und eine zweite Lage des Gebermagneten 105 bezüglich der Sensoranordnung zu bestimmen, wenn der Betrag $|B_2|$ der zweiten Kombinationsgröße größer als der Betrag $|B_1|$ der ersten Kombinationsgröße ist.

Die Verarbeitungseinrichtung 130 ist ferner ausgebildet, um, falls die erste Lage bestimmt wurde, bei einem positiven Vorzeichen der zweiten Magnetfeldkomponente $B_{1z}$ oder der vierten Magnetfeldkomponente $B_{2z}$ eine erste Magnetisierungsrichtung anzugeben, und, falls die zweite Lage bestimmt wurde, eine zweite Magnetisierungsrichtung anzugeben, und, falls die erste Lage bestimmt wurde, bei einem negativen Vorzeichen der zweiten Magnetfeldkomponente $B_{1z}$ oder der vierten Magnetfeldkomponente $B_{2z}$ die zweite Magnetisierungsrichtung anzugeben, und, falls die zweite Lage bestimmt wurde, die erste Magnetisierungsrichtung anzugeben.

Gemäß einem weiteren Aspekt ist die Verarbeitungseinrichtung 130 der Sensoranordnung ausgebildet, um die erste Magnetfeldkomponente $B_{1x}$ mit der zweiten Magnetfeldkomponente $B_{1z}$ und die dritte Magnetfeldkomponente $B_{2x}$ mit der vierten Magnetfeldkomponente $B_{2z}$ jeweils derart zu kombinieren, dass der Betrag $|B_1|$ der ersten Kombinationsgröße eine Betragsfunktion $|B_{1x}, B_{1z}|$ und der Betrag $|B_2|$ der zweiten Kombinationsgröße eine Betragsfunktion $|B_{2x}, B_{2z}|$ darstellen.

Die Verarbeitungseinrichtung 130 ist ferner ausgebildet, um die Betragsfunktion mittels eines CORDIC-Algorithmus zu berechnen.

Die Verarbeitungseinrichtung 130 ist ferner ausgebildet, um die erfasste Magnetfeldkomponente $B_x$ bezüglich der ersten Raumrichtung 101 oder die erfasste Magnetfeldkomponente $B_z$ bezüglich der zweiten Raumrichtung 102 mit einem ersten Gewichtungsfaktor kleiner oder gleich 0,75 zu gewichten.

Gemäß einem weiteren Aspekt sind der erste Magnetfeldsensor 110 und der zweite Magnetfeldsensor 120 der Sensoranordnung jeweils als mehrachsiger Magnetfeldsensor ausgebildet, wobei jedes Sensorelement des mehrachsigen Magnetfeldsensors eine Magnetempfindlichkeit bezüglich der ersten Raumrichtung 101 und der zweiten Raumrichtung 102 aufweist.

Gemäß einem Aspekt weist ein Verfahren 100 zum Ermitteln einer Magnetisierungsrichtung 107 eines Gebermagneten 105 bezüglich einer Sensoranordnung 100, wobei die Sensoranordnung 100 einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102 und einen davon beabstandeten zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102 aufweist, folgende Schritte auf: Kombinieren der ersten Magnetfeldkomponente $B_{1x}$ und der zweiten Magnetfeldkomponente $B_{1z}$, um eine erste Kombinationsgröße $B_1$ zu erhalten; Kombinieren der dritten Magnetfeldkomponente $B_{2x}$ und der vierten Magnetfeldkomponente $B_{2z}$, um eine zweite Kombinationsgröße $B_2$ zu erhalten; Ermitteln einer Lage des Gebermagneten 105 bezüglich der Sensoranordnung 100 basierend auf einem Vergleich der ersten Kombinationsgröße $B_1$ und der zweiten Kombinationsgröße $B_2$; und Ermitteln der Magnetisierungsrichtung 107 basierend auf der ermittelten Lage des Gebermagneten 105 bezüglich der Sensoranordnung 100 und auf einem Vorzeichen einer erfassten Magnetfeldkomponente $B_z$ bezüglich der zweiten Raumrichtung 102.

Gemäß einem weiteren Aspekt des Verfahrens werden jeweils die erste Magnetfeldkomponente $B_{1x}$ und die dritte Magnetfeldkomponente $B_{2x}$ in einer axialen Richtung und die zweite Magnetfeldkomponente $B_{1z}$ und die vierte Magnetfeldkomponente $B_{2z}$ in einer radialen Richtung bezüglich einer Relativbewegungsrichtung des Gebermagneten 105 bezüglich der Sensoranordnung erfasst.

Gemäß einem weiteren Aspekt des Verfahrens wird bei dem Schritt des Eimittelns der Lage eine erste Lage des Gebermagneten 105 bezüglich der Sensoranordnung bestimmt, wenn ein Betrag $|B_1|$ der ersten Kombinationsgröße größer als ein Betrag $|B_2|$ der zweiten Kombinationsgröße ist, und eine zweite Lage des Gebermagneten 105 bezüglich der Sensoranordnung wird bestimmt, wenn der Betrag $|B_2|$ der zweiten Kombinationsgröße größer als der Betrag $|B_1|$ der ersten Kombinationsgröße ist.

Gemäß einem weiteren Aspekt des Verfahrens wird bei dem Schritt des Ermittelns der Magnetisierungsrichtung 107, falls die erste Lage bestimmt wurde, bei einem positiven Vorzeichen der zweiten Magnetfeldkomponente $B_{1z}$ oder der vierten Magnetfeldkomponente $B_{2z}$ eine erste Magnetisierungsrichtung angegeben, und, falls die zweite Lage bestimmt wurde, eine zweite Magnetisierungsrichtung angegeben, und, falls die erste Lage bestimmt wurde, bei einem negativen Vorzeichen der zweiten Magnetfeldkomponente $B_{1z}$ oder der vierten Magnetfeldkomponente $B_{2z}$ die zweite Magnetisierungsrichtung angegeben, und, falls die zweite Lage bestimmt wurde, die erste Magnetisierungsrichtung angegeben.

Gemäß einem weiteren Aspekt des Verfahrens wird die erste Magnetfeldkomponente $B_{1x}$ mit der zweiten Magnetfeldkomponente $B_{1z}$ und die dritte Magnetfeldkomponente $B_{2x}$ mit der vierten Magnetfeldkomponente $B_{2z}$ jeweils derart kombiniert, dass der Betrag $|B_1|$ der ersten Kombinationsgröße eine Betragsfunktion $|B_{1x}, B_{1z}|$ und der Betrag $|B_2|$ der zweiten Kombinationsgröße eine Betragsfunktion $|B_{2x}, B_{2z}|$ darstellen.

Gemäß einem Aspekt weist eine Sensoranordnung 100 zum Ermitteln einer Magnetisierungsrichtung 107 eines Gebermagneten 105 folgende Merkmale auf: einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102; einen zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102; wobei der erste Magnetfeldsensor 110 und der zweite Magnetfeldsensor 120 beabstandet voneinander angeordnet sind; und eine Verarbeitungseinrichtung 130, die ausgebildet ist, um zu bestimmen, ob sich der Gebermagnet 105 innerhalb eines Mittenbereichs 410 um einen Referenzpunkt 155 der Sensoranordnung 100 befindet, basierend auf einem Vergleich einer von dem ersten Magnetfeldsensor 110 oder zweiten Magnetfeldsensor 120 erfassten Magnetfeldkomponente $B_x$ bezüglich

der ersten Raumrichtung 101 mit einer von dem ersten Magnetfeldsensor 110 oder zweiten Magnetfeldsensor 120 erfassten Magnetfeldkomponente $B_z$ bezüglich der zweiten Raumrichtung 102; falls sich der Gebermagnet 105 innerhalb des Mittenbereichs 410 befindet, um die Magnetisierungsrichtung 107 basierend auf einem Vorzeichen einer erfassten Magnetfeldkomponente $B_x$ bezüglich der ersten Raumrichtung 101 zu ermitteln; und falls sich der Gebermagnet 105 außerhalb des Mittenbereichs 410 befindet, um die erste Magnetfeldkomponente $B_{1x}$ und die zweite Magnetfeldkomponente $B_{1z}$ miteinander zu kombinieren, um eine erste Kombinationsgröße $B_1$ zu erhalten; um die dritte Magnetfeldkomponente $B_{2x}$ und die vierte Magnetfeldkomponente $B_{2z}$ miteinander zu kombinieren, um eine zweite Kombinationsgröße $B_2$ zu erhalten; um basierend auf einem Vergleich der ersten Kombinationsgröße $B_1$ und der zweiten Kombinationsgröße $B_2$ eine Lage des Gebermagneten 105 bezüglich der Sensoranordnung 100 zu ermitteln; und um basierend auf der ermittelten Lage des Gebermagneten 105 bezüglich der Sensoranordnung 100 und auf einem Vorzeichen einer erfassten Magnetfeldkomponente $B_z$ bezüglich der zweiten Raumrichtung 102 die Magnetisierungsrichtung 107 zu ermitteln.

Die Verarbeitungseinrichtung 130 ist ferner ausgebildet, um bei einem positiven Vorzeichen der erfassten Magnetfeldkomponente $B_x$ bezüglich der ersten Raumrichtung 101 die erste Magnetisierungsrichtung anzugeben und bei einem negativen Vorzeichen der erfassten Magnetfeldkomponente $B_x$ bezüglich der ersten Raumrichtung 101 die zweite Magnetisierungsrichtung anzugeben, wenn ein Betrag $|B_x|$ der erfassten Magnetfeldkomponente bezüglich der ersten Raumrichtung 101 größer als ein Betrag $|B_z|$ der erfassten Magnetfeldkomponente bezüglich der zweiten Raumrichtung 102 ist.

Die Verarbeitungseinrichtung 130 ist ferner ausgebildet, um den Betrag $|B_x|$ und den Betrag $|B_z|$ jeweils über eine Betragsfunktion zu ermitteln.

Die Verarbeitungseinrichtung 130 ist ferner ausgebildet, um den Betrag $|B_x|$ oder den Betrag $|B_z|$ mit einem zweiten Gewichtungsfaktor zu gewichten, so dass der Mittenbereich 410 um den Referenzpunkt 155 verkleinert wird.

Die Verarbeitungseinrichtung 130 ist ferner ausgebildet, um den Betrag $|B_x|$ mit dem zweiten Gewichtungsfaktor zwischen 0,25 und 1 zu gewichten.

Gemäß einem Aspekt weist ein Verfahren zum Ermitteln einer Magnetisierungsrichtung 107 eines Gebermagneten 105 bezüglich einer Sensoranordnung 100, wobei die Sensoranordnung 100 einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102 und einen davon beabstandeten zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102 aufweist, folgende Schritte auf: Bestimmen, ob sich der Gebermagnet 105 innerhalb eines Mittenbereichs 410 um einen Referenzpunkt 155 der Sensoranordnung 100 befindet, basierend auf einem Vergleich einer von dem ersten Magnetfeldsensor 110 oder zweiten Magnetfeldsensor 120 erfassten Magnetfeldkomponente $B_x$ bezüglich der ersten Raumrichtung 101 mit einer von dem ersten Magnetfeldsensor 110 oder zweiten Magnetfeldsensor 120 erfassten Magnetfeldkomponente $B_z$ bezüglich der zweiten Raumrichtung 102; falls sich der Gebermagnet 105 innerhalb des Mittenbereichs 410 befindet, Ermitteln der Magnetisierungsrichtung 107 basierend auf einem Vorzeichen einer erfassten Magnetfeldkomponente $B_x$ bezüglich der ersten Raumrichtung 101; und falls sich der Gebermagnet 105 außerhalb des Mittenbereichs 410 befindet, Ermitteln der Magnetisierungsrichtung 107 gemäß dem Verfahren 100 zum Ermitteln einer Magnetisierungsrichtung 107 eines Gebermagneten 105 bezüglich einer Sensoranordnung 100, wobei die Sensoranordnung 100 einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102 und einen davon beabstandeten zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102 aufweist, das folgende Schritte aufweist: Kombinieren der ersten Magnetfeldkomponente $B_{1x}$ und der zweiten Magnetfeldkomponente $B_{1z}$, um eine erste Kombinationsgröße $B_1$ zu erhalten; Kombinieren der dritten Magnetfeldkomponente $B_{2x}$ und der vierten Magnetfeldkomponente $B_{2z}$, um eine zweite Kombinationsgröße $B_2$ zu erhalten; Ermitteln einer Lage des Gebermagneten 105 bezüglich der Sensoranordnung 100 basierend auf einem Vergleich der ersten Kombinationsgröße $B_1$ und der zweiten Kombinationsgröße $B_2$; und Ermitteln der Magnetisierungsrichtung 107 basierend auf der ermittelten Lage des Gebermagneten 105 bezüglich der Sensoranordnung 100 und auf einem Vorzeichen einer erfassten Magnetfeldkomponente $B_z$ bezüglich der zweiten Raumrichtung 102.

Ein Aspekt weist ein Computerprogramm auf zum Durchführen des Verfahrens 100 zum Ermitteln einer Magnetisierungsrichtung 107 eines Gebermagneten 105 bezüglich einer Sensoranordnung 100, wobei die Sensoranordnung 100 einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102 und einen davon beabstandeten zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102 aufweist, das folgende Schritte aufweist: Kombinieren der ersten Magnetfeldkomponente $B_{1x}$ und der zweiten

Magnetfeldkomponente $B_{1z}$, um eine erste Kombinationsgröße $B_1$ zu erhalten; Kombinieren der dritten Magnetfeldkomponente $B_{2x}$ und der vierten Magnetfeldkomponente $B_{2z}$, um eine zweite Kombinationsgröße $B_2$ zu erhalten; Ermitteln einer Lage des Gebermagneten 105 bezüglich der Sensoranordnung 100 basierend auf einem Vergleich der ersten Kombinationsgröße $B_1$ und der zweiten Kombinationsgröße $B_2$; und Ermitteln der Magnetisierungsrichtung 107 basierend auf der ermittelten Lage des Gebermagneten 105 bezüglich der Sensoranordnung 100 und auf einem Vorzeichen einer erfassten Magnetfeldkomponente $B_z$ bezüglich der zweiten Raumrichtung 102, wenn das Computerprogramm auf einem Prozessor läuft.

Ein Aspekt weist ein Computerprogramm zum Durchführen des Verfahrens zum Ermitteln einer Magnetisierungsrichtung 107 eines Gebermagneten 105 bezüglich einer Sensoranordnung 100, wobei die Sensoranordnung 100 einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102 und einen davon beabstandeten zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102 aufweist, das folgende Schritte aufweist: Bestimmen, ob sich der Gebermagnet 105 innerhalb eines Mittenbereichs 410 um einen Referenzpunkt 155 der Sensoranordnung 100 befindet, basierend auf einem Vergleich einer von dem ersten Magnetfeldsensor 110 oder zweiten Magnetfeldsensor 120 erfassten Magnetfeldkomponente $B_x$ bezüglich der ersten Raumrichtung 101 mit einer von dem ersten Magnetfeldsensor 110 oder zweiten Magnetfeldsensor 120 erfassten Magnetfeldkomponente $B_z$ bezüglich der zweiten Raumrichtung 102; falls sich der Gebermagnet 105 innerhalb des Mittenbereichs 410 befindet, Ermitteln der Magnetisierungsrichtung 107 basierend auf einem Vorzeichen einer erfassten Magnetfeldkomponente $B_x$ bezüglich der ersten Raumrichtung 101; und falls sich der Gebermagnet 105 außerhalb des Mittenbereichs 410 befindet, Ermitteln der Magnetisierungsrichtung 107 gemäß dem Verfahren 100 zum Ermitteln einer Magnetisierungsrichtung 107 eines Gebermagneten 105 bezüglich einer Sensoranordnung 100, wobei die Sensoranordnung 100 einen ersten Magnetfeldsensor 110 zur Erfassung einer ersten Magnetfeldkomponente $B_{1x}$ bezüglich einer ersten Raumrichtung 101 und einer zweiten Magnetfeldkomponente $B_{1z}$ bezüglich einer zweiten Raumrichtung 102 und einen davon beabstandeten zweiten Magnetfeldsensor 120 zur Erfassung einer dritten Magnetfeldkomponente $B_{2x}$ bezüglich der ersten Raumrichtung 101 und einer vierten Magnetfeldkomponente $B_{2z}$ bezüglich der zweiten Raumrichtung 102 aufweist, das folgende Schritte aufweist: Kombinieren der ersten Magnetfeldkomponente $B_{1x}$ und der zweiten Magnetfeldkomponente $B_{1z}$, um eine erste Kombinationsgröße $B_1$ zu erhalten; Kombinieren der dritten Magnetfeldkomponente $B_{2x}$ und der vierten Magnetfeldkomponente $B_{2z}$, um eine zweite Kombinationsgröße $B_2$ zu erhalten; Ermitteln einer Lage des Gebermagneten 105 bezüglich der Sensoranordnung 100 basierend auf einem Vergleich der ersten Kombinationsgröße $B_1$ und der zweiten Kombinationsgröße $B_2$; und Ermitteln der Magnetisierungsrichtung 107 basierend auf der ermittelten Lage des Gebermagneten 105 bezüglich der Sensoranordnung 100 und auf einem Vorzeichen einer erfassten Magnetfeldkomponente $B_z$ bezüglich der zweiten Raumrichtung 102, wenn das Computerprogramm auf einem Prozessor läuft.

## Patentansprüche

1. Sensoranordnung (100) zum Ermitteln einer Magnetisierungsrichtung (107) eines Gebermagneten (105), , der eine Magnetachse (106) aufweist, die parallel zu einer Verschiebungsrichtung und parallel zu einer x-Richtung (101) eines Koordinatensystems ist, mit folgenden Merkmalen:

   einem ersten Magnetfeldsensor (110) zur Erfassung einer ersten Magnetfeldkomponente ($B_{1x}$) bezüglich der x-Richtung (101) und einer zweiten Magnetfeldkomponente ($B_{1z}$) bezüglich einer z-Richtung (102), die mit der x-Richtung (101) eine Ebene (x/z) aufspannt;
   einem zweiten Magnetfeldsensor (120) zur Erfassung einer dritten Magnetfeldkomponente ($B_{2x}$) bezüglich der x-Richtung (101) und einer vierten Magnetfeldkomponente ($B_{2z}$) bezüglich der z-Richtung (102), wobei die Sensoranordnung (100) einen Referenzpunkt (155) in der x-Richtung (101) definiert;
   wobei der erste Magnetfeldsensor (110) und der zweite Magnetfeldsensor (120) in der x-Richtung (101) beabstandet voneinander angeordnet sind; und
   einer Verarbeitungseinrichtung (130), die ausgebildet ist,
   um die erste Magnetfeldkomponente ($B_{1x}$) und die zweite Magnetfeldkomponente ($B_{1z}$) miteinander zu kombinieren, um eine erste Kombinationsgröße ($B_1$) zu erhalten;
   um die dritte Magnetfeldkomponente ($B_{2x}$) und die vierte Magnetfeldkomponente ($B_{2z}$) miteinander zu kombinieren, um eine zweite, identisch berechnete Kombinationsgröße ($B_2$) zu erhalten;
   um basierend auf einem Vergleich der ersten Kombinationsgröße ($B_1$) mit der zweiten Kombinationsgröße ($B_2$) eine erste oder eine zweite Lage des Gebermagneten (105) bezüglich des Referenzpunktes (155) entlang der x-Richtung (101) zu ermitteln, wobei die erste Lage des Gebermagneten (105) vorliegt, wenn der Betrag ($|B_1|$) der ersten Kombinationsgröße ($B_1$) größer als der Betrag ($|B_2|$) der zweiten Kombinationsgröße ($B_2$) ist und die zweite Lage des Gebermagneten (105) vorliegt, wenn der Betrag ($|B_1|$) der ersten Kombinationsgröße ($B_1$) kleiner als der Betrag ($|B_2|$) der zweiten Kombinationsgröße ($B_2$) ist; und

um basierend auf der ermittelten ersten oder zweiten Lage des Gebermagneten (105) und auf dem Vorzeichen der zweiten oder vierten Magnetfeldkomponente ($B_{1z}$; $B_{2z}$) bezüglich der z-Richtung (102) die Magnetisierungsrichtung (107) des Gebermagneten (105) in x-Richtung (101) zu ermitteln.

**2.** Die Sensoranordnung nach Anspruch 1, wobei der erste Magnetfeldsensor (110) und der zweite Magnetfeldsensor (120) ausgebildet sind, um jeweils die erste Magnetfeldkomponente ($B_{1x}$) und die dritte Magnetfeldkomponente ($B_{2x}$) in einer axialen Richtung und die zweite Magnetfeldkomponente ($B_{1z}$) und die vierte Magnetfeldkomponente ($B_{2z}$) in einer radialen Richtung bezüglich einer Relativbewegungsrichtung des Gebermagneten (105) bezüglich der Sensoranordnung zu erfassen.

**3.** Die Sensoranordnung nach Anspruch 1 oder 2, wobei die Verarbeitungseinrichtung (130) ausgebildet ist, um, falls die erste Lage bestimmt wurde, bei einem positiven Vorzeichen der zweiten Magnetfeldkomponente ($B_{1z}$) oder der vierten Magnetfeldkomponente ($B_{2z}$) eine erste Magnetisierungsrichtung anzugeben, und, falls die zweite Lage bestimmt wurde, eine zweite Magnetisierungsrichtung anzugeben, und, falls die erste Lage bestimmt wurde, bei einem negativen Vorzeichen der zweiten Magnetfeldkomponente ($B_{1z}$) oder der vierten Magnetfeldkomponente ($B_{2z}$) die zweite Magnetisierungsrichtung anzugeben, und, falls die zweite Lage bestimmt wurde, die erste Magnetisierungsrichtung anzugeben.

**4.** Die Sensoranordnung nach einem der Ansprüche 1 bis 3, wobei die Verarbeitungseinrichtung (130) ausgebildet ist, um die erste Magnetfeldkomponente ($B_{1x}$) mit der zweiten Magnetfeldkomponente ($B_{1z}$) und die dritte Magnetfeldkomponente ($B_{2x}$) mit der vierten Magnetfeldkomponente ($B_{2z}$) jeweils derart zu kombinieren, dass der Betrag ($|B_1|$) der ersten Kombinationsgröße eine Betragsfunktion ($|(B_{1x}, B_{1z})|$) und der Betrag ($|B_2|$) der zweiten Kombinationsgröße eine Betragsfunktion ($|(B_{2x}, B_{2z})|$) darstellen.

**5.** Die Sensoranordnung nach einem der Ansprüche 1 bis 4, wobei der erste Magnetfeldsensor (110) und der zweite Magnetfeldsensor (120) jeweils als mehrachsiger Magnetfeldsensor ausgebildet sind, wobei jedes Sensorelement des mehrachsigen Magnetfeldsensors eine Magnetempfindlichkeit bezüglich der x-Richtung (101) und der z-Richtung (102) aufweist.

**6.** Sensoranordnung (100) nach einem der Ansprüche 1 bis 5, wobei die Verarbeitungseinrichtung (130) ferner ausgebildet ist, um zu bestimmen, ob sich der Gebermagnet (105) innerhalb eines Mittenbereichs (410) um den Referenzpunkt (155) der Sensoranordnung (100) befindet, basierend auf einem Vergleich einer von dem ersten Magnetfeldsensor (110) oder zweiten Magnetfeldsensor (120) erfassten Magnetfeldkomponente ($B_x$) bezüglich der x-Richtung (101) mit einer von dem ersten Magnetfeldsensor (110) oder zweiten Magnetfeldsensor (120) erfassten Magnetfeldkomponente ($B_z$) bezüglich der z-Raumrichtung (102); und falls sich der Gebermagnet (105) innerhalb des Mittenbereichs (410) befindet, um die Magnetisierungsrichtung (107) basierend auf einem Vorzeichen einer erfassten Magnetfeldkomponente ($B_x$) bezüglich der x-Richtung (101) zu ermitteln.

**7.** Die Sensoranordnung nach Anspruch 6, wobei die Verarbeitungseinrichtung (130) ausgebildet ist, um bei einem positiven Vorzeichen der erfassten Magnetfeldkomponente ($B_x$) bezüglich der x-Richtung (101) die erste Magnetisierungsrichtung anzugeben und bei einem negativen Vorzeichen der erfassten Magnetfeldkomponente ($B_x$) bezüglich der x-Richtung (101) die zweite Magnetisierungsrichtung anzugeben, wenn ein Betrag ($|B_x|$) der erfassten Magnetfeldkomponente bezüglich der x-Richtung (101) größer als ein Betrag ($|B_z|$) der erfassten Magnetfeldkomponente bezüglich der z-Richtung (102) ist.

**8.** Verfahren (100) zum Ermitteln einer Magnetisierungsrichtung (107) eines Gebermagneten (105) bezüglich einer Sensoranordnung (100), gemäß einem der Ansprüche 1 bis 7 mit folgenden Schritten:

Kombinieren der ersten Magnetfeldkomponente ($B_{1x}$) mit der zweiten Magnetfeldkomponente ($B_{1z}$), um eine erste Kombinationsgröße ($B_1$) zu erhalten;
Kombinieren der dritten Magnetfeldkomponente ($B_{2x}$) mit der vierten Magnetfeldkomponente ($B_{2z}$), um eine zweite, identisch berechnete Kombinationsgröße ($B_2$) zu erhalten;
Ermitteln einer ersten oder einer zweiten Lage des Gebermagneten (105) bezüglich des Referenzpunktes (155) entlang der x-Richtung (101) basierend auf einem Vergleich der ersten Kombinationsgröße ($B_1$) mit der zweiten Kombinationsgröße ($B_2$), wobei die erste Lage des Gebermagneten (105) vorliegt, wenn der Betrag ($|B_1|$) der ersten Kombinationsgröße ($B_1$) größer als der Betrag ($|B_2|$) der zweiten Kombinationsgröße ($B_2$) ist und die zweite Lage des Gebermagneten (105) vorliegt, wenn der Betrag ($|B_1|$) der ersten Kombinationsgröße ($B_1$) kleiner als der Betrag ($|B_2|$) der zweiten Kombinationsgröße ($B_2$) ist; und Ermitteln der Magnetisierungsrichtung (107) des Gebermagneten (105) in x-Richtung (101) basierend auf der ermittelten ersten oder zweiten Lage des Gebermagneten (105) und auf dem Vorzeichen der zweiten oder vierten Magnetfeldkomponente ($B_{1z}$; $B_{2z}$) bezüglich der z-Richtung (102).

9. Das Verfahren nach Anspruch 8, wobei bei dem Schritt des Ermittelns der Magnetisierungsrichtung (107), falls die erste Lage bestimmt wurde, bei einem positiven Vorzeichen der zweiten Magnetfeldkomponente ($B_{1z}$) oder der vierten Magnetfeldkomponente ($B_{2z}$) eine erste Magnetisierungsrichtung angegeben wird, und, falls die zweite Lage bestimmt wurde, eine zweite Magnetisierungsrichtung angegeben wird, und, falls die erste Lage bestimmt wurde, bei einem negativen Vorzeichen der zweiten Magnetfeldkomponente ($B_{1z}$) oder der vierten Magnetfeldkomponente ($B_{2z}$) die zweite Magnetisierungsrichtung angegeben wird, und, falls die zweite Lage bestimmt wurde, die erste Magnetisierungsrichtung angegeben wird.

10. Das Verfahren nach einem der Ansprüche 8 oder 9, wobei die erste Magnetfeldkomponente ($B_{1x}$) mit der zweiten Magnetfeldkomponente ($B_{1z}$) und die dritte Magnetfeldkomponente ($B_{2x}$) mit der vierten Magnetfeldkomponente ($B_{2z}$) jeweils derart kombiniert wird, dass der Betrag ($|B_1|$) der ersten Kombinationsgröße eine Betragsfunktion ($|(B_{1x}, B_{1z})|$) und der Betrag ($|B_2|$) der zweiten Kombinationsgröße eine Betragsfunktion ($|(B_{2x}, B_{2z})|$) darstellen.

11. Verwendung der Sensoranordnung gemäß einem der Ansprüche 1 bis 7, ferner mit folgenden Schritten:

Bestimmen, ob sich der Gebermagnet (105) innerhalb eines Mittenbereichs (410) um einen Referenzpunkt (155) der Sensoranordnung (100) befindet, basierend auf einem Vergleich einer von dem ersten Magnetfeldsensor (110) oder zweiten Magnetfeldsensor (120) erfassten Magnetfeldkomponente ($B_x$) bezüglich der x-Richtung (101) mit einer von dem ersten Magnetfeldsensor (110) oder zweiten Magnetfeldsensor (120) erfassten Magnetfeldkomponente ($B_z$) bezüglich der z-Richtung (102); falls sich der Gebermagnet (105) innerhalb des Mittenbereichs (410) befindet, Ermitteln der Magnetisierungsrichtung (107) basierend auf einem Vorzeichen einer erfassten Magnetfeldkomponente ($B_x$) bezüglich der x-Richtung (101); und falls sich der Gebermagnet (105) außerhalb des Mittenbereichs (410) befindet, Ermitteln der Magnetisierungsrichtung (107) gemäß dem Verfahren nach einem der Ansprüche 8 bis 10.

12. Computerprogrammprodukt mit einem Computerprogramm, das Softwaremittel zum Durchführen des Verfahrens nach einem der Ansprüche 8 bis 10 aufweist, wenn das Computerprogramm auf einem Prozessor läuft.

## Claims

1. Sensor assembly (100) for determining a magnetization direction (107) of an indicator magnet (105) that comprises a magnetic axis (106), which is parallel to a shift direction and parallel to an x direction (101) of a coordinate system, comprising:

a first magnetic field sensor (110) for detecting a first magnetic field component ($B_{1x}$) with respect to the x direction (101) and a second magnetic field component ($B_{1z}$) with respect to a z direction (102), which spans a plane (x/z) together with the x direction (101 ; a second magnetic field sensor (120) for detecting a third magnetic field component ($B_{2x}$) with respect to the x direction (101) and a fourth magnetic field component ($B_{2z}$) with respect to the z direction (102), wherein the sensor assembly (100) defines a reference point (155) in the x direction (101); wherein the first magnetic field sensor (110) and the second magnetic field sensor (120) are arranged spaced apart from one another in the x direction (101); and a processing means (130), that is implemented to combine the first magnetic field component ($B_{1x}$) and the second magnetic field component ($B_{1z}$) to obtain a first combination quantity ($B_1$); to combine the third magnetic field component ($B_{2x}$) and the fourth magnetic field component ($B_{2z}$) to obtain a second identically calculated combination quantity ($B_2$); to determine a first or a second position of the indicator magnet (105) with respect to the reference point (155) along the x direction (101) based on a comparison of the first combination quantity ($B_1$) and the second combination quantity ($B_2$), wherein the first position of the indicator magnet (105) is present when the magnitude ($|B_1|$) of the first combination quantity ($B_1$) is

greater than the magnitude ($|B_2|$) of the second combination quantity($B_2$), and the second position of the indicator magnet (105) is present when the magnitude ($|B_1|$) of the first combination quantity ($B_1$) is smaller than the magnitude ($|B_2|$) of the second combination quantity ($B_2$); and
to determine the magnetization direction (107) of the indicator magnet (105) in x direction (101) based on the determined first or second position of the indicator magnet (105) and on the sign of the second or fourth magnetic field component ($B_{1z}$; $B_{2z}$) with respect to the z direction (102).

2. The sensor assembly according to claim 1, wherein the first magnetic field sensor (110) and the second magnetic field sensor (120) are implemented to each detect the first magnetic field component ($B_{1x}$) and the third magnetic field component ($B_{2x}$) in an axial direction and the second magnetic field component ($B_{1z}$) and the fourth magnetic field component ($B_{2z}$) in a radial direction with respect to a relative direction of movement of the indicator magnet (105) with respect to the sensor assembly.

3. The sensor assembly according to claim 1 or 2, wherein the processing means (130) is implemented to state, when the first position has been determined, a first magnetization direction at a positive sign of the second magnetic field component ($B_{1z}$) or the fourth magnetic field component ($B_{2z}$), and to state a second magnetization direction when the second position has been determined, and to state, when the first position has been determined, the second magnetization direction at a negative sign of the second magnetic field component ($B_{1z}$) or the fourth magnetic field component ($B_{2z}$), and to state the first magnetization direction when the second position has been determined.

4. The sensor assembly according to one of claims 1 to 3, wherein the processing means (130) is implemented to combine the first magnetic field component ($B_{1x}$) with the second magnetic field component ($B_{1z}$) and the third magnetic field component ($B_{2x}$) with the fourth magnetic field component ($B_{2z}$), each in such a way that the magnitude ($|B_1|$) of the first combination quantity represents a magnitude function ($|(B_{1x}, B_{1z})|$) and the magnitude ($|B_2|$) of the second combination quantity represents a magnitude function ($|(B_{2x}, B_{2z})|$).

5. The sensor assembly according to one of claims 1 to 4, wherein the first magnetic field sensor (110) and the second magnetic field sensor (120) are each implemented as multi-axis magnetic field sensor, wherein each sensor element of the multi-axis magnetic field sensor comprises a magnetic sensitivity with respect to the x direction (101) and the z direction (102).

6. Sensor assembly (100) according to one of claims 1 to 5, wherein the processing means (130) is further implemented
to determine whether the indicator magnet (105) is within a central region (410) around the reference point (155) of the sensor assembly (100), based on a comparison of a magnetic field component ($B_x$) detected by the first magnetic field sensor (110) or the second magnetic field sensor (120) with respect to the x direction (101) with a magnetic field component ($B_z$) detected by the first magnetic field sensor (110) or the second magnetic field sensor (120) with respect to the z direction; and
if the indicator magnet (105) is within the central region (410), to determine the magnetization direction (107) based on a sign of a detected magnetic field component ($B_x$) with respect to the x direction.

7. The sensor assembly according to claim 6, wherein the processing means (130) is implemented to state the first magnetization direction at a positive sign of the detected magnetic field component ($B_x$) with respect to the x direction (101), and to state the second magnetization direction at a negative sign of the detected magnetic field component ($B_x$) with respect to the x direction (101), when a magnitude ($|(B_x|$) of the detected magnetic field component with respect to the x direction (101) is greater than a magnitude ($|(B_z|$) of the detected magnetic field component with respect to the z direction (102).

8. Method (100) for determining a magnetization direction (107) of an indicator magnet (105) with respect to a sensor assembly (100) according to one of claims 1 to 7, comprising:

combining the first magnetic field component ($B_{1x}$) and the second magnetic field component ($B_{1z}$) to obtain a first combination quantity ($B_1$);
combining the third magnetic field component ($B_{2x}$) and the fourth magnetic field component ($B_{2z}$) to obtain a second identically calculated combination quantity ($B_2$);
determining a first or a second position of the indicator magnet (105) with respect to the reference point (155) along the x direction (101) based on a comparison of the first combination quantity ($B_1$) and a second combination quantity ($B_2$), wherein the first position of the indicator magnet (105) is present when the magnitude ($|B_1|$) of the first combination quantity ($B_1$) is greater than the magnitude ($|B_2|$) of the second combination quantity($B_2$), and the second position of the indicator magnet (105) is present when the magnitude ($|B_1|$) of the first combina-

tion quantity ($B_1$) is smaller than the magnitude ($|B_2|$) of the second combination quantity ($B_2$); and

determining the magnetization direction (107) of the indicator magnet (105) in x direction (101) based on the determined first or second position of the indicator magnet (105) and on the sign of the second or fourth magnetic field component ($B_{1z}$; $B_{2z}$) with respect to the z direction (102).

9. The method according to claim 8, wherein in the step of determining the magnetization direction (107), when the first position has been determined, a first magnetization direction is stated at a positive sign of the second magnetic field component ($B_{1z}$) or the fourth magnetic field component ($B_{2z}$), and when the second position has been determined, a second magnetization direction is stated, and when the first position has been determined, the second magnetization direction is stated at a negative sign of the second magnetic field component ($B_{1z}$) or the fourth magnetic field component ($B_{2z}$), and when the second position has been determined, the first magnetization direction is stated.

10. The method according to one of claims 8 or 9, wherein the first magnetic field component ($B_{1x}$) is combined with the second magnetic field component ($B_{1z}$) and the third magnetic field component ($B_{2x}$) with the fourth magnetic field component ($B_{2z}$), such that the magnitude ($|B_1|$) of the first combination quantity represents a magnitude function ($|(B_{1x}, B_{1z})|$) and the magnitude ($|B_2|$) of the second combination quantity represents a magnitude function ($|(B_{2x}, B_{2z})|$).

11. Usage of the sensor assembly (100) according to one of claims 1 to 7, further comprising:

determining whether the indicator magnet (105) is within a central region (410) around a reference point (155) of the sensor assembly (100), based on a comparison of a magnetic field component ($B_x$) detected by the first magnetic field sensor (110) or the second magnetic field sensor (120) with respect to the x direction (101) with a magnetic field component ($B_z$) detected by the first magnetic field sensor (110) or the second magnetic field sensor (120) with respect to the z direction; and

if the indicator magnet (105) is within the central region (410), determining the magnetization direction (107) based on a sign of a detected magnetic field component ($B_x$) with respect to the x direction (101); and

if the indicator magnet (105) is outside the central region (410), determining the magnetization direction (107) according to the method of one of claims 8 to 10.

12. Computer program product having a computer program comprising software means for performing the method according to one of claims 8 to 10, when the computer program runs on a processor.

**Revendications**

1. Aménagement de capteur (100) pour détecter une direction d'aimantation (107) d'un aimant de capteur (105) qui présente un axe magnétique (106) qui est parallèle à une direction de déplacement et parallèle à une direction x (101) d'un système de coordonnées, aux caractéristiques suivantes:

un premier capteur de champ magnétique (110) destiné à détecter une première composante de champ magnétique ($B_{1x}$) par rapport à la direction x (101) et une deuxième composante de champ magnétique ($B_{1z}$) par rapport à une direction z (102) qui délimite, avec la direction x (101), un plan (x/ z);
un deuxième capteur de champ magnétique (120) destiné à détecter une troisième composante de champ magnétique ($B_{2x}$) par rapport à la direction x (101) et une quatrième composante de champ magnétique ($B_{2z}$) par rapport à la direction z (102), l'aménagement de capteur (100) définissant un point de référence (155) dans la direction x (101);
le premier capteur de champ magnétique (110) et le deuxième capteur de champ magnétique (120) dans la direction x (101) étant disposés distants l'un de l'autre; et
un dispositif de traitement (130) qui est conçu pour combiner la première composante de champ magnétique ($B_{1x}$) et la deuxième composante de champ magnétique ($B_{1z}$) l'une avec l'autre, pour obtenir une première grandeur de combinaison ($B_1$);
pour combiner la troisième composante de champ magnétique ($B_{2x}$) et la quatrième composante de champ magnétique ($B_{2z}$) l'une avec l'autre, pour obtenir une deuxième grandeur de combinaison ($B_2$) calculée de manière identique;
pour déterminer, sur base d'une comparaison entre la première grandeur de combinaison ($B_1$) et la deuxième grandeur de combinaison ($B_2$), une première ou une deuxième position de l'aimant de capteur (105) par rapport au point de référence (155) dans la direction x (101), la première position de l'aimant de capteur (105) étant présente lorsque la quantité ($|B_1|$) de la première grandeur de combinaison ($B_1$) est supérieure à la quantité ($|B_2|$) de la deuxième gran-

deur de combinaison ($B_2$) et la deuxième position de l'aimant de capteur (105) est présente lorsque la quantité ($|B_1|$) de la première grandeur de combinaison ($B_1$) est inférieure à la quantité ($|B_2|$) de la deuxième grandeur de combinaison ($B_2$); et

pour déterminer, sur base de la première ou la deuxième position déterminée de l'aimant de capteur (105) et du signe de la deuxième ou de la quatrième composante de champ magnétique ($B_{1z}$; $B_{2z}$) par rapport à la direction z (102), la direction d'aimantation (107) de l'aimant de capteur (105) dans la direction x (101).

2. Aménagement de capteur selon la revendication 1, dans lequel le premier capteur de champ magnétique (110) et le deuxième capteur de champ magnétique (120) sont conçus pour détecter respectivement la première composante de champ magnétique ($B_{1x}$) et la troisième composante de champ magnétique ($B_{2x}$) dans une direction axiale et la deuxième composante de champ magnétique ($B_{1z}$) et la quatrième composante de champ magnétique ($B_{2z}$) dans une direction radiale par rapport à une direction de mouvement relatif de l'aimant de capteur (105) par rapport à l'aménagement de capteur.

3. Aménagement de capteur selon la revendication 1 ou 2, dans lequel le moyen de traitement (130) est conçu pour indiquer, si la première position a été déterminée, à un signe positif de la deuxième composante de champ magnétique ($B_{1z}$) ou la quatrième composante de champ magnétique ($B_{2z}$), une première direction d'aimantation et pour indiquer, si la deuxième position a été déterminée, une deuxième direction d'aimantation, et pour indiquer, si la première position a été déterminée, à un signe négatif de la deuxième composante de champ magnétique ($B_{1z}$) ou de la quatrième composante de champ magnétique ($B_{2z}$), la deuxième direction d'aimantation et pour indiquer, si la deuxième position a été déterminée, la première direction d'aimantation.

4. Aménagement de capteur selon l'une des revendications 1 à 3, dans lequel le moyen de traitement (130) est conçu pour combiner respectivement la première composante de champ magnétique ($B_{1x}$) avec la deuxième composante de champ magnétique ($B_{1z}$) et la troisième composante de champ magnétique ($B_{2x}$) avec la quatrième composante de champ magnétique ($B_{2z}$) de sorte que la quantité ($|B_1|$) de la première grandeur de combinaison représente une fonction de quantité ($|B_{1x}, B_{1z}|$) et la quantité ($|B_2|$) de la deuxième grandeur de combinaison représente une fonction de quantité ($|B_{2x}, B_{2z}|$).

5. Aménagement de capteur selon l'une des revendications 1 à 4, dans lequel le premier capteur de champ magnétique (110) et le deuxième capteur de champ magnétique (120) sont conçus, chacun, comme capteur de champ magnétique multiaxe, chaque élément de capteur du capteur de champ magnétique multiaxe présentant une sensibilité magnétique par rapport à la direction x (101) et la direction z (102).

6. Aménagement de capteur (100) selon l'une des revendications 1 à 5, dans lequel le moyen de traitement (130) est par ailleurs conçu

pour déterminer, si l'aimant de capteur (105) se trouve à l'intérieur d'une zone centrale (410) autour du point de référence (155) de l'aménagement de capteur (100), sur base d'une comparaison entre une composante de champ magnétique ($B_x$) détectée par le premier capteur de champ magnétique (110) ou le deuxième capteur de champ magnétique (120) par rapport à la direction x (101) et une composante de champ magnétique ($B_z$) détectée par le premier capteur de champ magnétique (110) ou le deuxième capteur de champ magnétique (120) par rapport à la direction spatiale z (102); et

pour déterminer, si l'aimant de capteur (105) se trouve dans la zone centrale (410), la direction d'aimantation (107) sur base d'un signe d'une composante de champ magnétique ($B_x$) détectée par rapport à la direction x (101).

7. Aménagement de capteur selon la revendication 6, dans lequel le moyen de traitement (130) est conçu pour indiquer, à un signe positif de la composante de champ magnétique ($B_x$) détectée par rapport à la direction x (101), la première direction d'aimantation et pour indiquer, à un signe négatif de la composante de champ magnétique ($B_x$) détectée par rapport à la direction x (101), la deuxième direction d'aimantation lorsqu'une quantité ($|B_x|$) de la composante de champ magnétique détectée par rapport à la direction x (101) est supérieure à une quantité ($|B_z|$) de la composante de champ magnétique détectée par rapport à la direction z (102).

8. Procédé (100) pour détecter une direction d'aimantation (107) d'un aimant de capteur (105) par rapport à un aménagement de capteur (100) selon l'une des revendications 1 à 7, aux étapes suivantes consistant à:

combiner la première composante de champ magnétique ($B_{1x}$) avec la deuxième composante de champ magnétique ($B_{1z}$), pour obtenir une première grandeur de combinaison ($B_1$);
combiner la troisième composante de champ magnétique ($B_{2x}$) avec la quatrième composante de champ magnétique ($B_{2z}$), pour obtenir une deuxième grandeur de combinaison ($B_2$) calcu-

lée de manière identique;

déterminer une première ou une deuxième position de l'aimant de capteur (105) par rapport au point de référence (155) dans la direction x (101), sur base d'une comparaison entre la première grandeur de combinaison ($B_1$) et la deuxième grandeur de combinaison ($B_2$), la première position de l'aimant de capteur (105) étant présente lorsque la quantité ($|B_1|$) de la première grandeur de combinaison ($B_1$) est supérieure à la quantité ($|B_2|$) de la deuxième grandeur de combinaison ($B_2$) et la deuxième position de l'aimant de capteur (105) étant présente lorsque la quantité ($|B_1|$) de la première grandeur de combinaison ($B_1$) est inférieure à la quantité ($|B_2|$) de la deuxième grandeur de combinaison ($B_2$); et

déterminer la direction d'aimantation (107) de l'aimant de capteur (105) dans la direction x (101) sur base de la première ou de la deuxième position déterminée de l'aimant de capteur (105) et du signe de la deuxième ou de la quatrième composante de champ magnétique ($B_{1z};B_{2z}$) par rapport à la direction z (102).

9. Procédé selon la revendication 8, dans lequel, à l'étape consistant à déterminer la direction d'aimantation (107), si la première position a été déterminée, à un signe positif de la deuxième composante de champ magnétique ($B_{1z}$) ou de la quatrième composante de champ magnétique ($B_{2z}$), est indiquée une première direction d'aimantation et, si la deuxième position a été déterminée, est indiquée une deuxième direction d'aimantation et, si la première position a été déterminée, à un signe négatif de la deuxième composante de champ magnétique ($B_{1z}$) ou de la quatrième composante de champ magnétique ($B_{2z}$), est indiquée la deuxième direction d'aimantation et, si la deuxième position a été déterminée, est indiquée la première direction d'aimantation.

10. Procédé selon l'une des revendications 8 ou 9, dans lequel sont combinées respectivement la première composante de champ magnétique ($B_{1x}$) avec la deuxième composante de champ magnétique ($B_{1z}$) et la troisième composante de champ magnétique ($B_{2x}$) avec la quatrième composante de champ magnétique ($B_{2z}$) de sorte que la quantité ($|B_1|$) de la première grandeur de combinaison représente une fonction de quantité ($|B_{1x}, B_{1z}|$) et la quantité ($|B_2|$) de la deuxième grandeur de combinaison représente une fonction de quantité ($|B_{2x}, B_{2z}|$).

11. Utilisation de l'aménagement de capteur selon l'une des revendications 1 à 7, par ailleurs avec les étapes suivantes consistant à:

déterminer si l'aimant de capteur (105) se trouve à l'intérieur d'une zone centrale (410) autour d'un point de référence (155) de l'aménagement de capteur (100), sur base d'une comparaison entre composante de champ magnétique ($B_x$) détectée par le premier capteur de champ magnétique (110) ou le deuxième capteur de champ magnétique (120) par rapport à la direction x (101) et une composante de champ magnétique ($B_z$) détectée par le premier capteur de champ magnétique (110) ou le deuxième capteur de champ magnétique (120) par rapport à la direction z (102);

si l'aimant de capteur (105) se trouve dans la zone centrale (410), déterminer la direction d'aimantation (107) sur base d'un signe d'une composante de champ magnétique ($B_x$) détectée par rapport à la direction x (101); et

si l'aimant de capteur (105) se trouve en dehors de la zone centrale (410), déterminer la direction d'aimantation (107) selon le procédé de l'une des revendications 8 à 10.

12. Produit de programme d'ordinateur avec un programme d'ordinateur qui comprend des moyens logiciels pour réaliser le procédé selon l'une des revendications 8 à 10 lorsque le programme d'ordinateur est exécuté sur un processeur.

FIG 1A

FIG 1B

FIG 2

"links"     "rechts"

107

S → N

105

109

102  Z
    X
101

110  $B_{1x}$     $B_{2x}$  120

$B_{1z} < 0$     $B_{2z} < 0$

165

0

155

## FIG 3A

"links"     "rechts"

107

N ← S

105

109

102  Z
    X
101

110  $B_{1z}$     $B_{2z}$  120

$B_{1x}$     $B_{2x}$

165

0

155

$\Rightarrow B_{1z} > 0$ und $B_{2z} > 0$

## FIG 3B

FIG 3C

FIG 3D

| | Bz>0 | Bz<0 |
|---|---|---|
| Magnet auf der **negativen** Seite der X-Achse | Magnetisierung des Magneten in -X Richtung | Magnetisierung des Magneten in +X Richtung |
| Magnet auf der **positiven** Seite der X-Achse | Magnetisierung des Magneten in +X Richtung | Magnetisierung des Magneten in -X Richtung |

## FIG 3E

FIG 4

EP 2 545 342 B1

FIG 5

FIG 6

Messwert in Teisa

$5 \times 10^{-3}$
$4 \times 10^{-3}$
$3 \times 10^{-3}$
$2 \times 10^{-3}$
$1 \times 10^{-3}$
$0$

$|B_1|$

$|B_2|$

620

610

605

$|B_2| > |B_1|$   $|B_1| > |B_2|$

$4 \times 10^{-3}$
$2 \times 10^{-3}$
$0$

$-0.02$   $-0.01$   $0$   $0.01$   $0.02$

X-Position des Magneten in m

$\Rightarrow$ Magnetposition
"rechts"/"links"

FIG 7

FIG 8

EP 2 545 342 B1

FIG 9

(bewegter Permanentmagnet (X-Richtung))

12

12

Bewegungsrichtung

(Magnetfeldlinie
durch den Sensor 109
(X/Z-Ebene))

z

y

x

10
(Magnetfeldsensor)

FIG 10

EP 2 545 342 B1

FIG 11

FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19836599 A1
- EP 1464918 A2